# EUROPEAN PATENT SPECIFICATION

(11) **EP 0 923 616 B1**
(45) Date of publication and mention of the grant of the patent: **10.09.2003**
(21) Application number: 96929916.3
(22) Date of filing: 04.09.1996
(51) Int. Cl.: C08L 23/02, C08L 25/00

(54) **BLENDS CONTAINING AN INTERPOLYMER OF ALPHA-OLEFIN**
MISCHUNGEN MIT ALPHA-OLEFIN INTERPOLYMER
MELANGES CONTENANT UN INTERPOLYMERE D'ALPHAOLEFINES

(43) Date of publication of application: 23.06.1999
(73) Proprietor: Dow Global Technologies Inc., Midland, Michigan 48674 (US)
(72) Inventor: STEVENS, James, C., Richmond, TX 77469 (US); TIMMERS, Francis, J., Midland, MI 48642 (US); GUEST, Martin, J., Lake Jackson, TX 77566 (US); GATHERS, John, J., Pearland, TX 77584 (US); CHUM, Pak-Wing, S., Lake Jackson, TX 77566 (US); CHEUNG, Yunwa, W., Lake Jackson, TX 77566 (US); PARK, Chung, P., D-76532 Baden-Baden (DE); CLINGERMAN, George, P., Newark, OH 43055 (US); SIKKEMA, Kevin, D., NL-4561 ES Huist (NL)
(74) Representative: Smulders, Theodorus A.H.J., Ir.
(86) International application number: US9614233
(87) International publication number: WO98010014

(56) References cited:
- EP-A- 0 739 906
- WO-A-95/27755
- WO-A-95/32095
- US-A- 3 117 945
- PLASTICS TECHNOLOGY, vol. 38, no. 10, September 1992, page 25 XP000618214 SCHUT J H: "FIRST TECHNICAL DETAILS ON SOME NEXT-GENERATION POLYOLEFINS"
- PATENT ABSTRACTS OF JAPAN vol. 096, no. 010, 31 October 1996 & JP 08 142243 A (NIPPON MEKTRON LTD;TOSOH CORP)
- CHEMICAL ABSTRACTS, vol. 122, no. 20, 15 May 1995 Columbus, Ohio, US; abstract no. 240559v, "synthesis, structure and properties of styrene-ethylene copolymers" XP002031264 & GAOFENZI XUEBAO, no. 3, 1994, pages 282-8, LU ET AL.:

## Description

The present invention pertains to blends of α-olefin/hindered vinylidene monomer interpolymers and vinyl aromatic polymers; foams therefrom and also foams from only α-olefin/hindered vinylidene monomer interpolymers. The blend components and their ratio were selected to provide superior performance and/or processability.

The generic class of materials covered by α-olefin/hindered vinylidene monomer substantially random interpolymers and including materials such as α-olefin/vinyl aromatic monomer interpolymers are known in the art and offer a range of material structures and properties which makes them useful for varied applications, such as compatibilizers for blends of polyethylene and polystyrene as described in US 5,460,818.

One particular aspect described by D'Anniello et al. (Journal of Applied Polymer Science, Volume 58, pages 1701-1706 (1995)) is that such interpolymers can show good elastic properties and energy dissipation characteristics. In another aspect, selected interpolymers can find utility in adhesive systems, as illustrated in United States patent number 5,244,996, issued to Mitsui Petrochemical Industries Ltd.

Although of utility in their own right, Industry is constantly seeking to improve the applicability of these interpolymers. Such enhancements may be accomplished via additives, but it is desirable to develop technologies to provide improvements in processability or performance without the addition of additives or further improvements than can be achieved with the addition of additives.

U.S. Patent No. 3,117,945 (W.F. Gorham) describes so-called "gross" styrene/ethylene copolymers which have at least 20 wt% of copolymerized styrene and which can be solvent fractionated into several different copolymer fractions depending on the choice of solvent.

Park et al., in WO 95/27755 describes a method of increasing the toughness and solvent resistance of a homopolymer or interpolymer of a monovinylidene aromatic monomer, by blending it with an olefin polymer such as a polyethylene or ethylene/octene copolymer. However because of the incompatability of these two types of resins, there is a requirement for a compatabilizer which Park teaches can be a pseudo random interpolymer of an aliphatic α-olefin and a vinylidene aromatic monomer.

Bradfute et al, in WO 95/32095 discloses multilayer films having at least one layer which is an ethylene/styrene copolymer. However, Bradfute et al., do not disclose any examples of blends of a substantially random interpolymer of vinylidene aromatic monomer and α-olefin monomer with a homopolymer or interpolymer of a monovinylidene aromatic monomer.

Lu et al., in CA 22:240559v discloses styrene-ethylene (S-E) copolymers and blends with polystyrene which have S-E contents of 0-10 wt.%

Ikuya et al., in JP 08142243 disclose buffer materials prepared by filling a foaming material of ethylene-styrene copolymer in the skin part of a thermoplastic resin and intergrally bonding the skin to a foam.

EP-A 0 739 906 is a publication citable under Article 54(3) EPC; it discloses a constrained geometry catalyst and a process for the production of an ethylene styrene copolymer with this catalyst.

In the art, there remains a need to provide materials based on α-olefin/ vinylidene aromatic monomer interpolymers with superior performance characteristics to the unmodified polymers, which will further expand the utility of the interesting class of materials.
The present invention pertains in one aspect to a blend of polymeric materials comprising:
(A) from 35 to 99 weight percent of at least one interpolymer containing
   (1) from 1 to 65 mole percent of
      (a) at least one vinylidene aromatic monomer, or
      (b) at least one hindered aliphatic vinylidene monomer, or
      (c) a combination of at least one vinylidene aromatic monomer and at least one hindered aliphatic vinylidene monomer, and
   (2) from 35 to 99 mole percent of at least one aliphatic α-olefin having from 2 to 20 carbon atoms;
   which interpolymer has a distribution of the monomers that can be described by the Bernoulli statistical model or by a first or second order Markovian statistical model; and
(B) from 1 to 65 weight percent of
   (1) at least one homopolymer of a vinylidene aromatic monomer, or
   (2) at least one interpolymer of one or more vinylidene aromatic monomers and/or one or more hindered aliphatic vinylidene monomers, or
   (3) at least one of (1) or (2) which additionally contains an impact modifier, or
   (4) a combination of any two or more of (1), (2) or (3).

The present invention pertains in a further aspect to a fabricated article comprising a blend of polymeric materials consisting of
(A) from 35 to 99 weight percent of at least one interpolymer as defined in claim 1(A) and
(B) from 1 to 65 weight percent of at least one polymer as defined in claim 1(B).

The present invention also pertains to foamable compositions comprising
(I) at least one blowing agent; and
(II) at least one interpolymer or blend of interpolymers comprising
   (A) from 1 to 100 percent by weight of at least one interpolymer consisting of
      (1) from 1 to 65 mole percent of (a) at least one vinylidene aromatic monomer, or (b) at least one hindered aliphatic vinylidene monomer, or (c) a combination of at least one vinylidene aromatic monomer and at least one hindered aliphatic vinylidene monomer, and
      (2) from 35 to 99 mole percent of at least one aliphatic α-olefin having from 2 to 20 carbon atoms; and
   (B) from 0 to 99 percent by weight of at least one homopolymer of a vinylidene aromatic monomer or a hindered aliphatic vinylidene monomer, or at least one interpolymer of one or more vinylidene aromatic monomers and/or one or more hindered aliphatic vinylidene monomers and optionally one or more polymerizable ethylenically unsaturated monomers other than the one or more vinylidene aromatic monomers or the one or more hindered aliphatic vinylidene monomers.

The blends and expandable materials of the present invention can comprise, consist essentially of or consist of any two or more of such interpolymers enumerated herein. Likewise, the interpolymers consist of any two or more of the enumerated polymerizable monomers.

These blends provide an improvement in one or more of the polymer properties such as mechanical performance and/or melt processability.

The term "interpolymer" is used herein to indicate a polymer wherein at least two different monomers were polymerized to make the interpolymer.

The term "substantially random"in the substantially random interpolymer comprising an α-olefin and a vinylidene aromatic monomer or hindered aliphatic vinylidene monomer as used herein means that the distribution of the monomers of said interpolymer can be described by the Bernoulli statistical model or by a first or second order Markovian statistical model, as described by J.C. Randall in POLYMER SEQUENCE DETERMINATION, Carbon-13 NMR Method, Academic Press, New York, 1977, pp 71-78. Preferably, the substantially random interpolymer comprising an α-olefin and a vinylidene aromatic monomer does not contain more than 15 percent of the total amount of vinylidene aromatic monomer in blocks of vinylidene aromatic monomer of more than 3 units. More preferably, the interpolymer was not characterized by a high degree of either isotacticity or syndiotacticity. This means that in the 13C-NMR spectrum of the substantially random interpolymer the peak areas corresponding to the main chain methylene and methine carbons representing either meso diad sequences or racemic diad sequences should not exceed 75 percent of the total peak area of the main chain methylene and methine carbons.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time is, for example, from 1 to 90, preferably from 20 to 90, more preferably from 30 to 70, it is intended that values such as 15 to 85, 22 to 68, 43 to 51, 30 to 32 are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the nighest value enumerated are to be considered to be expressly stated in this application in a similar manner.

The interpolymers suitable for use as component (A) to make the blends comprising the present invention include interpolymers obtainable by polymerizing one or more α-olefins with one or more vinylidere aromatic monomers and/or one or more hindered aliphatic vinylidene monomers.

Suitable α-olefins include for example, those containing frcm 2 to 20, preferably from 2 to 12, more preferably from 2 to 8 carbon atoms. Particularly suitable are ethylene, or a combination of ethylene and at least one of propylene, butene-1, 4-methyl-1-pentane, hexene-1 and octane-1.

Suitable vinylidene aromatic monomes include, for example, those represented by the following formula I: 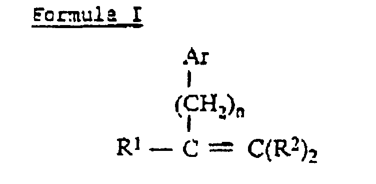 wherein R¹ is selected from the group of radicals consisting of hydrogen and alkyl radicals containing from 1 to 4 carbon atoms, preferably hydrogen or methyl; each R² is independently selected from the group of radicals consisting of hydrogen and alkyl radicals containing from 1 to 4 carbon atoms, preferably hydrogen or methyl; Ar is a phenyl group or a phenyl group substituted with from 1 to 5 substituents selected from the group consisting of halo, C₁₋₄-alkyl, and C₁₋₄-haloalkyl; and n has a value from zero to 6, preferably from zero to 2, more preferably zero. Exemplary monovinylidene aromatic monomers include styrene, vinyl toluene, α-methylstyrene, t-butyl styrene, chlorostyrene, including all isomers of these compounds. Particularly suitable such monomers include styrene and lower alkyl-or halogen-substituted derivatives thereof. Preferred monomers include styrene, α-methyl styrene, the lower alkyl- or phenyl-ring substituted derivatives of styrene, such as ortho-, meta-, and para-methylstyrene, the ring halogenated styrenes, para-vinyl toluene or mixtures thereof. A more preferred monovinylidene aromatic monomer is styrene.

By the term "hindered aliphatic or cycloaliphatic vinylidene monomers" is meant addition polymerizable vinylidene monomers corresponding to the following formula II: 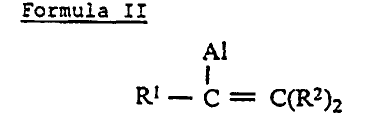 wherein and A1 is a sterically bulky, aliphatic substituent of up to 20 carbons, R¹ is selected from the group of radicals consisting of hydrogen and alkyl radicals containing from 1 to 4 carbon atoms, preferably hydrogen or methyl; each R² is independently selected from the group of radicals consisting of hydrogen and alkyl radicals containing from 1 to 4 carbon atoms, preferably hydrogen or methyl; or alternatively R¹ and A1 together form a ring system. By the term "sterically bulky" is meant that the monomer bearing this substituent is normally incapable of addition polymerization by standard Ziegler-Natta polymerization catalysts at a rate comparable with ethylene polymerizations. Preferred hindered aliphatic or cycloaliphatic vinylidene monomers are those in which one of the carbon atoms bearing ethylenic unsaturation is tertiary or quaternary substituted. Examples of such substituents include cyclic aliphatic groups such as cyclohexyl, cyclohexenyl, cyclooctenyl, or ring alkyl or aryl substituted derivatives thereof, tert-butyl, or norbornyl. Most preferred hindered aliphatic vinylidene compounds are vinyl cyclohexane and the various isomeric vinyl- ring substituted derivatives of cyclohexene and substituted cyclohexenes, and 5-ethylidene-2-norbornene. Especially suitable is vinyl cyclohexane.

The interpolymors of one or more α-olefins and one or more monovinylidene aromatic monomers and/or one or more hindered aliphatic or cycloaliphatic vinylidene monomers employed in the present invention are substantially random polymers. These interpolymers usually contain from 1 to 65, preferably from 5 to 60, more preferably from 10 to 55 mole percent of at least one vinylidene aromatic monomer and/or hindered aliphatic or cycloaliphatic vinylidene monomer and from 35 to 99, preferably from 40 to 95, more preferably from 45 to 90 mole percent of at least one aliphatic α-olefin having from 2 to 20 carbon atoms.

The number average molecular weight (Mn) of these interpolymers is usually greater than 1,000, preferably from 5,000 to 1,000,000, more preferably from 10,000 to 500,000.

The present invention provides blends of interpolymer components of molecular weight end composition distributions selected to obtain an overall molecular weight and composition distribution which gives enhanced properties or processability.

The blends of the present invention based on the combined weight of (A) and (B) comprise from 1 to 99, preferably from 3 to 97, more preferably from 5 to 95 percent of component (A) by weight and from 99 to 1, preferably from 97 to 3, more preferably from 95 to 5 percent of component (9) by weight. Those blends of the present invention containing from 35 to 99, preferably from 40 to 97, more preferably from 40 to 95 percent of component (A) by weight and from 65 to 1, preferably from 60 to 5, more preferably from 40 to 5 percent of component (B) by weight are of particular interest in that in some instances, they possess much improved properties when compared to those blends containing less than 35 percent by weight of component (A).

While preparing the substantially random interpolymers, component (A), as will be described hereinafter, an amount of atactic vinylidene aromatic homopolymer may be formed due to homopolymerization of the vinylidane aromatic monomer, In general, the higher the polymerization temperature, the greater the amount of homopolymer formed. The presence of vinylidene aromatic homopolymer is in general not detrimental for the purposes of the present invention and may be tolerated. The vinylidene aromatic homopolymer may be separated from the interpolymer, if desired, by extraction techniques such as selective precipitation from solution with a non solvent for either the interpolymer or the vinylidene aromatic homopolymer. For the purpose of the present invention it is preferred that no more than 20 weight percent, preferably less than 15 weight percent based on the total weight of the interpolymers of vinylidene aromatic homopolymer is present in the interpolymer blend component.

The substantially random interpolymers may be modified by typical grafting, hydrogenation, functionalizing, or other reactions well known to those skilled in the art. The polymers may be readily sulfonated or chlorinated to provide functionalited derivatives according to established techniques.

The substantially random interpolymers can be produced by polymerisation in the presence of a metallocene or constrained geometry catalyst and a co-catalyst as described in EP-A-0,416,815 by James C. Stevens et al. and US Patent No. 5,703,187 by Francis J. Timmers. Preferred operating conditions for such polymerization reactions are pressures from atmospheric up to 3000 atmospheres and temperatures from -30°C to 200°C. Polymerisations and unreacted monomer removal at temperatures above the autopolymerization tempefature of the respective monomers may result in formation of some amounts of homopolymer polymerisation products resulting from free radical polymerization.

Examples of suitable catalysts and methods for preparing the substantially random interpolymers are disclosed in EP-A-514,828; as well as U.S. Patents: 5,055,438; 5,057,475; 5,096.867; 5,064,802; 5,132,380; 5,189,192; 5.321,106; 5,347,024; 5,350,723; 5,374,696; and 5,399,635.

The substantially random α-olefin/vinylidene aromatic interpolymers can also be prepared by the methods described by John G. Bradfute et al. (W. R. Grace & Co.) in WO 95/32095; by R. B. Pannell (Exxon Chemical Patents, Inc.) in WO 94/00500; and in Plastics Technology, p. 25 (September 1992).

Also suitable are the substantially random interpolymers which possess at least one α-olefin/vinyl aromatic/vinyl aromatic/α-olefin tetrad. These interpolymers contain additional signals with intensities greater than three times the peak to peak noise. These signals appear in the chemical shift range 43.75-44.25 ppm and 38.0-38.5 ppm. Specifically, major peaks are observed at 44.1, 43.9 and 38.2 ppm. An Attached Proton Test (APT) NMR experiment indicates that the signals in the chemical shift region 43.75-44.25 ppm are methine carbons and the signals in the region 38.0-38.5 ppm are methylene carbons.

In order to determine the carbon-13 NMR chemical shifts of these interpolymers, the following procedures and conditions are employed. A five to ten weight percent polymer solution is prepared in a mixture consisting of 50 volume percent 1,1,2,2-tetrachloroethane-d₂ and 50 volume percent 0.10 molar chromium tris(acetylacetonate) in 1,2,4-trichlorobenzene. NMR spectra are acquired at 130°C using an inverse gated decoupling sequence, a 90° pulse width and a pulse delay of five seconds or more. The spectra are referenced to the isolated methylene signal of the polymer assigned at 30.000 ppm.

It is believed that these new signals are due to sequences involving two head-to-tail vinyl aromatic monomer preceded and followed by at least one α-olefin insertion, e.g. an ethylene/styrene/styrene/ethylene tetrad wherein the styrene monomer insertions of said tetrads occur exclusively in a 1,2 (head to tail) manner. It is understood by one skilled in the art that for such tetrads involving a vinyl aromatic monomer other than styrene and an α-olefin other than ethylene that the α-olefin/vinyl aromatic monomer/vinyl aromatic monomer/α-olefin tetrad will give rise to similar carbon-13 NMR peaks but with slightly different chemical shifts.

These interpolymers are prepared by conducting the polymerization at temperatures of from -30°C to 250°C in the presence of such catalysts as those represented by the formula 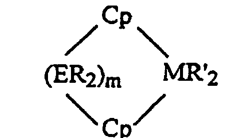 wherein: each Cp is independently, each occurrence, a substituted cyclopentadienyl group π-bound to M; E is C or Si; M is a group IV metal, preferably Zr or Hf, most preferably Zr; each R is independently, each occurrence, H, hydrocarbyl, silahydrocarbyl, or hydrocarbylsilyl, containing up to 30 preferably from 1 to 20 more preferably from 1 to 10 carbon or silicon atoms; each R' is independently, each occurrence, H, halo, hydrocarbyl, hyrocarbyloxy, silahydrocarbyl, hydrocarbylsilyl containing up to 30 preferably from 1 to 20 more preferably from 1 to 10 carbon or silicon atoms or two R' groups together can be a C₁₋₁₀ hydrocarbyl substituted 1,3-butadiene; m is 1 or 2; and optionally, but preferably in the presence of an activating cocatalyst. Particularly, suitable substituted cyclopentadienyl groups include those illustrated by the formula: 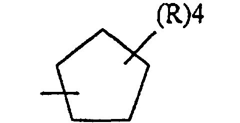 wherein each R is independently, each occurrence, H, hydrocarbyl, silahydrocarbyl, or hydrocarbylsilyl, containing up to 30 preferably from 1 to 20 more preferably from 1 to 10 carbon or silicon atoms or two R groups together form a divalent derivative of such group. Preferably, R independently each occurrence is (including where appropriate all isomers) hydrogen, methyl, ethyl, propyl, butyl, pentyl, hexyl, benzyl, phenyl or silyl or (where appropriate) two such R groups are linked together forming a fused ring system such as indenyl, fluorenyl, tetrahydroindenyl, tetrahydrofluorenyl, or octahydrofluorenyl, or substituted derivatives of these fused ring systems.

Particularly preferred catalysts include, for example, racemic-(dimethylsilanediyl)-bis-(2-methyl-4-phenylindenyl))zirconium dichloride, racemic-(dimethylsilanediyl)-bis-(2-methyl-4-phenylindenyl))zirconium 1,4-diphenyl-1,3-butadiene, racemic-(dimethylsilanediyl)-bis-(2-methyl-4-phenylindenyl))zirconium di-C₁₋₄ alkyl, racemic-(dimethylsilanediyl)-bis-(2-methyl-4-phenylindenyl)) zirconium di-C₁₋₄ alkoxide, or any combination thereof.

Further preparative methods for the interpolymer blend component (A) of the present invention have been described in the literature. Longo and Grassi (Makromol. Chem., Volume 191, pages 2387 to 2396 [1990]) and D'Anniello et al. (Journal of Applied Polymer Science, Volume 58, pages 1701-1706 [1995]) reported the use of a catalytic system based on methylalumoxane (MAO) and cyclopentadienyltitanium trichloride (CpTiCl₃) to prepare an ethylene-styrene copolymer. Xu and Lin (Polymer Preprints, Am.Chem.Soc.,Div. Polym. Chem.) Volume 35, pages 686,687 [1994]) have reported copolymerization using a TiCl₄/NdCl₃/Al(iBu)₃ catalyst to give random copolymers of styrene and propylene. Lu et al (Journal of Applied Polymer Science, Volume 53, pages 1453 to 1460 [1994]) have described the copolymerization of ethylene and styrene using a TiCl₄/NdCl₃/ MgCl₂ /Al(Et)₃ catalyst. The manufacture of α-olefin/vinyl aromatic monomer interpolymers such as propylene/styrene and butene/styrene are described in United States patent number 5,244,996, issued to Mitsui Petrochemical Industries Ltd.

The polymers of vinylidene aromatic monomers employed as component (B) in the present invention include homopolymers of a single vinylidene aromatic monomer or interpolymers prepared from one or more vinylidene aromatic monomers. Particularly suitable are the monovinylidene aromatic monomers.

Suitable monovinylidene aromatic polymers for use in component (B) of the present blends and/or foamable compositions include homopolymers or interpolymers of one or more monovinylidene aromatic monomers, or an interpolymer of one or more monovinylidene aromatic monomers and one or more monomers interpolymerizable therewith other than an aliphatic α-olefin. Suitable monovinylidene aromatic monomers are represented by the following formula: 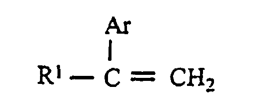 wherein R¹ is selected from the group of radicals consisting of hydrogen and hydrocarbyl radicals containing three carbons or less, and Ar is a phenyl group or a phenyl group substituted with from 1 to 5 substituents selected from the group consisting of halo, C₁₋₄-alkyl, and C₁₋₄-haloalkyl. Exemplary monovinylidene aromatic monomers include styrene, para-vinyl toluene, α-methylstyrene, t-butyl styrene, chlorostyrene, including all isomers of these compounds. Styrene is a particularly desirable monovinylidene aromatic monomer for the monovinylidene aromatic polymers used in the practice of the present invention.

Examples of suitable interpolymerizable comonomers other than a monovinylidene aromatic monomer include C₄ - C₆ conjugated dienes, especially butadiene or isoprene, N-phenyl maleimide, N-allyl maleimide, acrylamide, ethylenically-unsaturated nitrile monomers such as acrylonitrile and methacrylonitrile, ethylenically-unsaturated mono-and difunctional carboxylic acids and derivatives thereof such as esters and, in the case of difunctional acids, anhydrides, such as acrylic acid, C₁₋₄-alkylacrylates or methacrylates, such as n-butyl acrylate and methyl methacrylate, maleic anhydride, or any combination thereof. In some cases it is also desirable to copolymerize a cross-linking monomer such as a divinyl benzene into the monovinylidene aromatic polymer.

The polymers of monovinylidene aromatic monomers with other interpolymerizable comonomers preferably contain, polymerized therein, at least 50 mole percent, preferably at least 60 mole percent, and more preferably at least 70 mole percent of one or more monovinylidene aromatic monomers.

Component B may also be a flame resistant rubber modified styrenic blend composition. The flame resistant compositions are typically produced by adding flame retardants to a high impact polystyrene (HIPS) resin. The addition of flame retardants lowers the impact strength of the HIPS which is restored back to acceptable levels by the addition of impact modifiers, typically styrene-butadiene (SBS) block copolymers. Preferably, B is polystyrene or polystyrene containing an impact modifier. The final compositions are referred to as ignition resistant polystyrene, IRPS. The IRPS compositions typically contain the following components:
Component R) from 50 to 90 percent by weight based on total resin composition (R+S+T+U) of a rubber modified polymer derived from a vinyl aromatic monomer, e.g. HIPS,
Component S) a sufficient amount of halogen-containing flame retardant to provide the composition (R+S+T+U) with 7 to 14 percent by weight halogen,
Component T) from 2 to 6 percent by weight based on total resin composition (R+S+T+U) of an inorganic flame retardant synergist, and
Component U) from 1 to 8 percent by weight based on total resin composition (R+S+T+U) of an impact modifier.

Component R is a rubber modified vinyl aromatic polymer. Suitable polymers include those made from vinyl aromatic monomers typically represented by the formula: 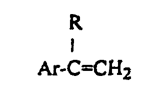 wherein R is hydrogen or methyl, Ar is an aromatic ring structure having from 1 to 3 aromatic rings with or without alkyl, halo, or haloalkyl substitution, wherein any alkyl group contains 1 to 6 carbon atoms and haloalkyl refers to a halogen substituted alkyl group. Preferably, Ar is phenyl or alkylphenyl with phenyl being most preferred. Typical vinyl aromatic monomers which can be used include: styrene, alpha-methylstyrene, all isomers of vinyl toluene, especially para-vinyltoluene, all isomers of ethyl styrene, propyl styrene, vinyl biphenyl, vinyl naphthalene, vinyl anthracene, and mixtures thereof. The vinyl aromatic monomer may also be combined with other copolymerizable monomers. Examples of such monomers include, but are not limited to acrylic monomers such as acrylonitrile, methacrylonitrile, methacrylic acid, methyl methacrylate, acrylic acid, and methyl acrylate, maleic anhydride, maleimide, and phenylmaleimide.

Rubber modified vinyl aromatic polymers can be prepared by polymerizing the vinyl aromatic monomer in the presence of a predissolved rubber to prepare impact modified, or grafted rubber containing products, examples of which are described in USP's 3,123,655, 3,346,520, 3,639,522, and 4,409,369. The rubber is typically a butadiene or isoprene rubber, preferably polybutadiene. Preferably, the rubber modified vinyl aromatic polymer is high impact polystyrene (HIPS).

The amount of rubber modified vinyl aromatic polymer used in the composition of the present invention is typically from 50 to 90, preferably from 60 to 88, more preferably from 70 to 85 and most preferably from 72 to 82, percent by weight based on total resin composition (R+S+T+U).

Component U is an impact modifier which can be any polymer which will increase the impact strength of the composition of the present invention. Typical impact modifiers include polybutadiene, polyisoprene, and copolymers of a vinyl aromatic monomer and a conjugated diene, e.g. styrene-butadiene copolymers, styrene-isoprene copolymers, including diblock and triblock copolymers. Other impact modifiers include copolymers of a vinyl aromatic monomer with hydrogenated dienes, ethylene-acrylic acid copolymers and ethylene-styrene copolymers. Preferably, the impact modifier is a styrene-butadiene-styrene triblock copolymer containing from 25 to 40 weight percent styrene component. When an ethylene/styrene interpolymer is employed as the impact modifier, the blend of the ethylene/styrene interpolymer and the polystyrene is a blend of the present invention.

The amount of impact modifier used in the composition of the present invention is typically from 1 to 8, preferably from 1 to 7, more preferably from 2 to 6, and most preferably from 2 to 5 percent by weight of total resin composition (R+S+T+U).

Component S is a flame retardant which can be any halogen-containing compound or mixture of compounds which imparts flame resistance to the composition of the present invention. Suitable flame retardants are well-known in the art and include but are not limited to hexahalodiphenyl ethers, octahalodiphenyl ethers, decahalodiphenyl ethers, decahalobiphenyl ethanes, 1,2-bis(trihalophenoxy)ethanes, 1,2-bis(pentahalophenoxy)ethanes, hexahalocyclododecane, a tetrahalobisphenol-A, ethylene (N, N')-bis-tetrahalophthalimides, tetrahalophthalic anhydrides, hexahalobenzenes, halogenated indanes, halogenated phosphate esters, halogenated paraffins, halogenated polystyrenes, and polymers of halogenated bisphenol-A and epichlorohydrin, or mixtures thereof. Preferably, the flame retardant is a bromine or chlorine containing compound. In a preferred embodiment, the flame retardant is decabromodiphenyl ether or a mixture of decabromodiphenyl ether with tetrabromobisphenol-A.

The amount of flame retardant present within the composition of the present invention will depend upon the halogen content of the specific flame retardant used. Typically, the amount of flame retardant is chosen such that from 7 to 14, preferably from 7 to 13, more preferably from 8 to 12 and most preferably from 9 to 11 percent by weight of total resin composition (R+S+T+U) of halogen is present in the composition of the present invention.

Component T is an inorganic flame retardant synergist which are known in the art as compounds which enhance the effectiveness of flame retardants, especially halogenated flame retardants. Examples of inorganic flame retardant synergistics include metal oxides, e.g. iron oxide, tin oxide, zinc oxide, aluminum trioxides alumina, antimony tri- and pentoxide, bismuth oxide, molybdenum trioxide, and tungsten trioxide, boron compounds such as zinc borate, antimony silicates, ferrocene and mixtures thereof.

The amount of inorganic flame retardant synergist present is typically from 2 to 6, preferably from 2 to 5, more preferably from 2.5 to 5 and most preferably from 2.5 to 4 percent by weight of total resin composition (R+S+T+U).

The compositions of the present invention may also contain minor amounts of typical processing aids such as mold release agents, plasticizers, flow promoters, e.g. waxes or mineral oil, pigments, thermal stabilizers, UV stabilizers, antioxidants, fillers, e.g. glass fibers, and glass beads.

The composition can be produced by any blending or mixing technique which will result in a generally uniform dispersion of all ingredients throughout the resulting product. Illustrative devices include Banbury mixers, compounding rolls, single screw extruders, and twin screw extruders. Additionally, the components of the composition can be combined in an apparatus such as a dry blender before being fed into a mixing/melting extruder apparatus, or two or more of the ingredients may be pre-mixed into a hot melt of the remaining components.

Suitable homopolymers and interpolymers which can be employed in the foam compositions of the present invention include those enumerated above plus interpolymers prepared from (a) one or more vinylidene aromatic monomers and/or one or more hindered aliphatic vinylidene monomers and (b) optionally, one or more polymerizable ethylenically unsaturated monomer different from those enumerated in (a). Suitable such polymerizable ethylenically unsaturated monomers include, for example, ethylenically unsaturated monocarboxylic acids having from 3 to 8, preferably from 3 to 6, more preferably from 3 to 4 carbon atoms; anhydrides of ethylenically unsaturated dicarboxylic acids having from 4 to 10, preferably from 4 to 8, more preferably from 4 to 6 carbon atoms; esters of ethylenically unsaturated monocarboxylic acids; ethylenically unsaturated nitriles; or any combination thereof. Particularly suitable such monomers include, for example, acrylic acid, methacrylic acid, methyl acrylate, methyl methacrylate, ethyl acrylate, ethyl methacrylate, propyl acrylate, propyl methacrylate, butyl acrylate, butyl methacrylate, maleic anhydride, acrylonitrile, methacrylonitrile or any combination thereof. The interpolymers can contain from zero up to 50, preferably up to 40, more preferably up to 30 weight percent of such monomers which are different from the monomers of (a).

The blends of the present invention may be prepared by any suitable means known in the art such as dry blending in a pelletized form in the desired proportions followed by melt blending in a screw extruder, or Banbury mixer. The dry blended pellets may be directly melt processed into a final solid state article by for example injection molding. Alternatively, the blends may be made by direct polymerization, without isolation of the blend components, using for example two or more catalysts in one reactor, or by using a single catalyst and two or more reactors in series or parallel.

An example of making the blend directly by polymerization is an in-reactor blend method as described in U.S. 4,168,353. That is, styrene monomer is impregnated into granules of an interpolymer blend component (A) suspended in a suitable liquid medium and graft-polymerized. The resultant blend granules are cooled and discharged from the vessel.

The present foam structure may take any physical configuration known in the art, such as sheet, plank, or bun stock. Other useful forms are expandable or foamable particles, moldable foam particles, or beads, and articles formed by expansion and/or coalescing and welding of those particles.

Teachings to processes for making and processing ethylenic polymer foam structures are in C. P. Park, "Polyolefin Foam", Chapter 9, *Handbook of Polymer Foams and Technology,* edited by D. Klempner and K. C., Hanser Publishers, Munich, Vienna, New York, Barcelona (1991).

The foam may result from subjecting the foamable compositions to foaming conditions and be made by a conventional extrusion foaming process. The structure is generally prepared by heating a polymer material to form a plasticized or melt polymer material, incorporating therein a blowing agent to form a foamable gel, and extruding the gel through a die to form the foam product. Prior to mixing with the blowing agent, the polymer material is heated to a temperature at or above its glass transition temperature or melting point. The blowing agent may be incorporated or mixed into the melt polymer material by any means known in the art such as with an extruder, mixer, or blender. The blowing agent is mixed with the melt polymer material at an elevated pressure sufficient to prevent substantial expansion of the melt polymer material and to generally disperse the blowing agent homogeneously therein. Optionally, a nucleator may be blended in the polymer melt or dry blended with the polymer material prior to plasticizing or melting. The foamable gel is typically cooled to a lower temperature to optimize physical characteristics of the foam structure. The gel is then extruded or conveyed through a die of desired shape to a zone of reduced or lower pressure to form the foam structure. The zone of lower pressure is at a pressure lower than that in which the foamable gel is maintained prior to extrusion through the die. The lower pressure may be superatmospheric or subatmospheric (vacuum), but is preferably at an atmospheric level. By this process, plank, sheet, rod and tube-shaped foam products are prepared.

The present foam structure may be formed in a coalesced strand form by extrusion of the ethylenic polymer material through a multi-orifice die. The orifices are arranged so that contact between adjacent streams of the molten extrudate occurs during the foaming process and the contacting surfaces adhere to one another with sufficient adhesion to result in a unitary foam structure. The streams of molten extrudate exiting the die take the form of strands or profiles, which desirably foam, coalesce, and adhere to one another to form a unitary structure. Desirably, the coalesced individual strands or profiles should remain adhered in a unitary structure to prevent strand delamination under stresses encountered in preparing, shaping, and using the foam. Apparatuses and method for producing foam structures in coalesced strand form are seen in U.S. Patent Nos. 3,573,152 and 4,824,720.

The present foam structure may also be formed by an accumulating extrusion process as seen in U.S. Pat. No. 4,323,528. In this process, low density foam structures having large lateral cross-sectional areas are prepared by: 1) forming under pressure a gel of the ethylenic polymer material and a blowing agent at a temperature at which the viscosity of the gel is sufficient to retain the blowing agent when the gel is allowed to expand; 2) extruding the gel into a holding zone maintained at a temperature and pressure which does not allow the gel to foam, the holding zone having an outlet die defining an orifice opening into a zone of lower pressure at which the gel foams, and an openable gate closing the die orifice; 3) periodically opening the gate; 4) substantially concurrently applying mechanical pressure by a movable ram on the gel to eject it from the holding zone through the die orifice into the zone of lower pressure, at a rate greater than that at which substantial foaming in the die orifice occurs and less than that at which substantial irregularities in cross-sectional area or shape occurs; and 5) permitting the ejected gel to expand unrestrained in at least one dimension to produce the foam structure.

The present foam structure may also be formed into non-crosslinked foam beads suitable for molding into articles. To make the foam beads, discrete resin particles such as granulated resin pellets are: suspended in a liquid medium in which they are substantially insoluble such as water; impregnated with a blowing agent by introducing the blowing agent into the liquid medium at an elevated pressure and temperature in an autoclave or other pressure vessel; and rapidly discharged into the atmosphere or a region of reduced pressure to expand to form the foam beads. This process is well taught in U.S. Pat. Nos. 4,379,859 and 4,464,484.

Foamable and expanded beads can be made by a batch or by an extrusion process. The batch process of making foamable beads is essentially the same as for manufacturing expandable polystyrene (EPS). The granules of a polymer blend, made either by melt blending or in-reactor blending as described above, are impregnated with a blowing agent in an aqueous suspension or in an anhydrous state in a pressure vessel at an elevated temperature and pressure. The granules are then either rapidly discharged into a region of reduced pressure to expand to foam beads or cooled and discharged as unexpanded beads. The unexpanded beads are then heated to expand with a proper means, e.g., with steam or with hot air. The extrusion method is essentially the same as the conventional foam extrusion process as described above up to the die orifice. The die has multiple holes. In order to make unfoamed beads, the foamable strands exiting the die orifice are immediately quenched in a cold water bath to prevent foaming and then pelletized. Or, the strands are converted to foam beads by cutting at the die face and then allowed to expand.

The foam beads may then be molded by any means known in the art, such as charging the foam beads to the mold, compressing the mold to compress the beads, and heating the beads such as with steam to effect coalescing and welding of the beads to form the article. Optionally, the beads may be impregnated with air or other blowing agent at an elevated pressure and temperature prior to charging to the mold. Further, the beads may be heated prior to charging. The foam beads may then be molded to blocks or shaped articles by a suitable molding method known in the art. (Some of the methods are taught in U.S. Pat. Nos. 3,504,068 and 3,953,558.) Excellent teachings of the above processes and molding methods are seen in C.P. Park, supra, p. 191, pp. 197-198, and pp. 227-229.

Blowing agents useful in making the present foam structure include inorganic blowing agents, organic blowing agents and chemical blowing agents. Suitable inorganic blowing agents include carbon dioxide, nitrogen, argon, water, air, nitrogen, and helium. Organic blowing agents include aliphatic hydrocarbons having 1-6 carbon atoms, aliphatic alcohols having 1-3 carbon atoms, and fully and partially halogenated aliphatic hydrocarbons having 1-4 carbon atoms. Aliphatic hydrocarbons include methane, ethane, propane, n-butane, isobutane, n-pentane, isopentane, and neopentane. Aliphatic alcohols include methanol, ethanol, n-propanol, and isopropanol. Fully and partially halogenated aliphatic hydrocarbons include fluorocarbons, chlorocarbons, and chlorofluorocarbons. Examples of fluorocarbons include methyl fluoride, perfluoromethane, ethyl fluoride, 1,1-difluoroethane (HFC-152a), 1,1,1-trifluoroethane (HFC-143a), 1,1,1,2-tetrafluoro-ethane (HFC-134a), 1,1,2,2-tetrafluoroethane (HFC 134), pentafluoroethane, difluoromethane, perfluoroethane, 2,2-difluoroprppane, 1,1,1-trifluoropropane, perfluoropropane, dichloropropane, difluoropropane, perfluorobutane, perfluorocyclobutane. Partially halogenated chlorocarbons and chlorofluorocarbons for use in this invention include methyl chloride, methylene chloride, ethyl chloride, 1,1,1-trichloroethane, 1,1-dichloro-1-fluoroethane (HCFC-141b), 1-chloro-1,1 difluoroethane (HCFC-142b), 1,1-dichloro-2,2,2-trifluoroethane (HCFC-123) and 1-chloro-1,2,2,2-tetrafluoroethane(HCFC-124). Fully halogenated chlorofluorocarbons include trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, and dichlorohexafluoropropane. Chemical blowing agents include sodium bicarbonate, mixtures of sodium bicarbonate and citric acid, azodicarbonamide, azodiisobutyro-nitrile, benezenesulfonhydrazide, 4,4-oxybenzene sulfonyl-semicarbazide, p-toluene sulfonyl semi-carbazide, barium azodicarboxylate, N,N'-dimethyl-N,N'-dinitrosoterephthalamide, and trihydrazino triazine. Preferred blowing agents depend upon the process and product. For manufacturing a low-density foam by the extrusion process, a volatile organic blowing agent or carbon dioxide is preferred. Preferred volatile organic blowing agents include n-butane, isobutane, n-pentane, isopentane, HFC-152a, and mixtures thereof. For manufacturing a foamable bead product, isobutane, n-pentane, isopentane and mixtures thereof are preferred.

The amount of blowing agents incorporated into the polymer melt material to make a foam-forming polymer gel is from 0.05 to 5.0, preferably from 0.2 to 4.0, and most preferably from 0.5 to 3.0 gram moles per kilogram of polymer.

Various additives may be incorporated in the present foam structure such as nucleating agents, inorganic fillers, pigments, antioxidants, acid scavengers, ultraviolet absorbers, flame retardants, processing aids, extrusion aids.

In addition, a nucleating agent may be added in order to control the size of foam cells. Preferred nucleating agents include inorganic substances such as calcium carbonate, talc, clay, titanium oxide, silica, barium sulfate, diatomaceous earth, mixtures of citric acid and sodium bicarbonate. The amount of nucleating agent employed may range from 0.01 to 5 parts by weight per hundred parts by weight of a polymer resin.

The present foam structure is substantially noncross-linked or uncross-linked. The alkenyl aromatic polymer material comprising the foam structure is substantially free of cross-linking. The foam structure contains no more than 5 percent gel per ASTM D-2765-84 Method A. A slight degree of cross-linking, which occurs naturally without the use of cross-linking agents or radiation, is permissible.

The present foam structure has density of less than 450, more preferably less than 200 and most preferably from 10 to 80 kilograms per cubic meter. The foam has an average cell size of from 0.02 to 5.0, more preferably from 0.2 to 2.0, and most preferably 0.3 to 1.8 millimeters according to ASTM D3576.

The present foam structure may take any physical configuration known in the art, such as extruded sheet, rod, plank, and profiles. The foam structure may also be formed by molding of foamable beads into any of the foregoing configurations or any other configuration.

The present foam structure may be closed-celled or open-celled. Preferably, the present foam contains 80 percent or more closed cells according to ASTM D2856-A.

Additives such as antioxidants (e.g., hindered phenols such as, for example, IRGANOX® 1010, a registered trademark of CIBA-GEIGY), phosphites (e.g., IRGAFOS® 168, a registered trademark of CIBA-GEIGY), uv stabilizers, cling additives (e.g., polyisobutylene), antiblock additives, colorants, pigments, or fillers can also be included in the interpolymers employed in the blends of the present invention, to the extent that they do not interfere with the enhanced properties discovered by Applicants.

The additives are employed in functionally equivalent amounts known to those skilled in the art. For example, the amount of antioxidant employed is that amount which prevents the polymer or polymer blend from undergoing oxidation at the temperatures and environment employed during storage and ultimate use of the polymers. Such amounts of antioxidants is usually in the range of from 0.01 to 10, preferably from 0.05 to 5, more preferably from 0.1 to 2 percent by weight based upon the weight of the polymer or polymer blend.

Similarly, the amounts of any of the other enumerated additives are the functionally equivalent amounts such as the amount to render the polymer or polymer blend antiblocking, to produce the desired amount of filler loading to produce the desired result, to provide the desired color from the colorant or pigment. Such additives can suitably be employed in the range of from 0.05 to 50, preferably from 0.1 to 35 more preferably from 0.2 to 20 percent by weight based upon the weight of the polymer or polymer blend. However, in the instance of fillers, they could be employed up to 90 percent by weight based on the weight of the polymer or polymer blend.

The blends of the present invention can be utilized to produce a wide range of fabricated articles such as, for example a sheet resulting from calendaring, casting or blowing a blend, an article resulting from injection, compression, extrusion or blow molding the blend and a fiber, foam or latex prepared from the blends. The blends of the present invention can also be utilized in adhesive formulations.

The compositions of the present invention containing ignition resistant polystyrene modified with ethylene/styrene interpolymers can be used in injection molding applications to manufacture TV cabinets, computer monitors, or printer housings.

The following examples are illustrative of the invention.

### TESTING

The properties of the polymers and blends were determined by the following test procedures
Melt Flow Rate (MFR) was determined by ASTM D-1238 (1979), Condition E (190°C; 2.16 kg).
Tensile Strength was determined by ASTM D-882-91, Procedure A except: Five replications of the test were made for each polymer blend tested. Grip separation was always 1 inch (2.54 cm). Grip separation speed was always 5 mm/min.
Modulus was determined by ASTM D-882-91, Procedure A except:
   Five replications of the test were made for each polymer blend tested. Grip separation was always 1 inch (2.54 cm). Grip separation speed was always 5 mm/min.
Elongation was determined by ASTM D-882-91, Procedure A except:
   Five replications of the test were made for each polymer blend tested. Grip separation was always 1 inch (2.54 cm). Grip separation speed was always 5 mm/min.
Toughness was determined by ASTM D-882-91, Procedure A2.1 except:
   Five replications of the test were made for each polymer blend tested. Grip separation was always 1 inch (2.54 cm). Grip separation speed was always 5 mm/min.

### Preparation of Ethylene/Styrene Interpolymers A - G

A two liter stirred reactor was charged with about 500 ml of mixed alkane solvent (ISOPAR™ E, a registered trademark of and available from Exxon Chemicals Inc.) and ca. 500 ml of styrene comonomer. Hydrogen was then added by differential pressure expansion from a 75 ml shot tank. The reactor was heated to the desired run temperature and the reactor was saturated with ethylene at the desired pressure. The (tetramethylcyclopentadienyl)(tert-butylamido)di-methylsilane titanium dimethyl catalyst and tris(pentafluorophenyl)-borane cocatalyst were mixed in a dry box by mixing the catalyst and cocatalyst in ISOPAR™ E in an inert atmosphere glove box. The resulting solution was transferred to a catalyst addition tank and injected into the reactor. The polymerization was allowed to proceed with ethylene on demand. Subsequent additions of catalyst solution prepared in the same manner were optionally added during the run.
After the run time the polymer solution was removed from the reactor and mixed with 100 mg of IRGANOX™ 1010 (a registered trademark of CIBA-GEIGY) in 10 ml of toluene. The polymers were precipitated with propanol and the volatiles were removed from the polymers in a reduced pressure vacuum oven at 120°C for ca. 20 hr.

The monomer amounts and polymerization conditions are provided in Table 1A. The yield and polymer properties are provided in Table 1B.

**Table 1A**

| **Inter- polymer** | **Isopar™ E (g)** | **Styrene (g)** | **Hydrogen (delta)** | | **Ethylene** | | **Run Time (min)** | **Run Temp (°C)** | **Catalyst (mol)** |
|---|---|---|---|---|---|---|---|---|---|
| | | | psig | kPa | psig | kPa | | | |
| A | 358 | 455 | 0 | 0 | 200 | 1,379 | 80 | 80 | 20 |
| B | 361 | 454 | 13 | 90 | 250 | 1,724 | 20 | 80 | 5 |
| C | 361 | 458 | 11 | 76 | 150 | 1,034 | 20 | 80 | 6 |
| D | 361 | 461 | 11 | 76 | 100 | 689 | 20 | 80 | 9 |
| E | 365 | 461 | 0 | 0 | 100 | 689 | 30 | 80 | 12 |
| F | 420 | 380 | 0 | 0 | 50 | 345 | 30 | 80 | 25 |
| G | 361 | 358 | 12 | 83 | 50 | 345 | 30 | 60 | 15 |
| H | 0 | 768 | 16 | 103 | 50 | 345 | 30 | 60 | 20 |
| I | 361 | 461 | 11 | 69 | 300 | 2,068 | 20 | 80 | 4 |

**Table 1B**

| **Interpolymer** | **Yield (g)** | **Melt Flow Rate dg/min** | **Styrene Content in Interpolymer** | | **E/S Inter- polymer** | **Amorphous Polystyrene Wt. %** |
|---|---|---|---|---|---|---|
| | | | **mol %** | **Wt. %** | **Wt. %** | |
| A | 72.7 | 0.195 | 20.1 | 48.3 | 96 | 4 |
| B | 69.9 | 0.40 | 7.4 | 22.9 | 99.6 | 0.4 |
| C | 57.7 | 0.74 | 17.8 | 44.6 | 98.1 | 1.9 |
| D | 48.4 | 3.62 | 24.9 | 55.2 | 97.8 | 2.2 |
| E | 59.3 | 1.52 | 26.5 | 57.3 | 97.4 | 2.6 |
| F | 85.6 | 13.1 | 34.3 | 66.0 | 94.8 | 5.2 |
| G | 114.7 | 1.07 | 41.0 | 72.1 | 98.6 | 1.4 |
| H | 96 | 0.92 | 47.3 | 76.9 | 94.8 | 5.2 |
| I | 67 | 0.14 | 8.4 | 25.4 | 98 | 2 |

### EXAMPLE 1

### A. Ethylene/styrene interpolymer

The ethylene/styrene interpolymer designated as H in Tables 1A & 1B was employed in this example.

### B. Preparation of blend of E/S interpolymer and polystyrene.

The polymer material was pelletized and blended with a general purpose polystyrene (PS) having a weight average molecular weight of about 200,000 and a polydispersity of 2.5. The level of the ES copolymer in the blend was varied from 0 to 40 %. The tests were as follows. A total of 40 grams of granular resin mixture was melt blended by using a Haake Rheocord Model 90 mixer for 15 minutes at 180 °C and 30 rpm rotor speed under a nitrogen blanket. The blends were pressed to thin sheets of approximately 0.9 mm thickness on a hot press maintained at 177 °C. The sheets were cut into 1/2" (1.27 cm)-wide strips by using a Thwing-Albert Model LDC-50 cutter. Tensile properties of the specimens were determined by using an Instron 1123 tensile tester at 5 mm/min cross-head speed and 1" (2.54 cm) jaw span. Five specimens were run for each blend and the average of the five data points was reported as the representative property for the blend.

The test results are shown in Table 2. At an ES level lower than 40%, the blend does not show a measurable improvement in mechanical toughness. At the blend level of 40%, these properties of the blend become dramatically improved. A 60/40: PS/ES blend was elongatable to over 70% of its original length and has a relatively high modulus. A transmission electron microscope micrograph shows that the blend has a co-continuous structure.

**Table 2**

| Test No. | ES Level (%) (1) | Tensile Strength (MPa) (2) | Elongatio n @ Break (%) (3) | Toughness (MJ/cu.m) (4) | Modulus (MPa) (5) |
|---|---|---|---|---|---|
| 1.1* | 0 | 39.2 | 5.4 | 1.2 | 924 |
| 1.2 | 10 | 28.1 | 4.4 | 0.6 | 827 |
| 1.3 | 20 | 24.5 | 3.3 | 0.5 | 965 |
| 1.4 | 30 | 35.7 | 5.2 | 1.0 | 972 |
| 1.5 | 40 | 27.6 | 70.2 | 18.5 | 876 |

| | | | | | |
|---|---|---|---|---|---|
| * Not an example of the present invention | | | | | |
| (1) ethylene/styrene interpolymer H mixed in as a percentage of the total polymer blend. | | | | | |
| (2) Tensile strength at break in megapascals. | | | | | |
| (3) Elongation at break in a percentage of the initial length. | | | | | |
| (4) Toughness determined by the area under the tensile curve in megajoules per cubic meter. | | | | | |
| (5) 2% secant modulus in megapascals. | | | | | |

### EXAMPLE 2

In this example, the tests of Example 1 were repeated with six different ES interpolymers with varying ethylene/styrene ratios and melt indices. The ES interpolymers were prepared as shown in Table 1A employing different ethylene/styrene ratios. All materials contained a small amount (less than 5.2%) of amorphous polystyrene. Forty parts of each ES interpolymer was blended with sixty parts of polystyrene as employed in Example 1. As shown in Table 3, all the ES interpolymer materials led to toughened polyblends. In general, an ES interpolymer having a higher level of styrene performs better. The ES interpolymer that was used in Test No. 2.5 was an exception. The performance of the resin falls off from the general trend. It is believed that the high melt index (or low viscosity) of the material is responsible for the relatively poor performance.

**Table 3**

| Test No. | E/S Interpolymer | | | Tensile Properties of polyblends | | | |
|---|---|---|---|---|---|---|---|
| | Type | Styrene % (1) | MFR dg/Min (2) | Tensile Strength @ Break (MPa) (3) | Elongation @ Break (%) (4) | Toughness (MJ/m³) (5) | Modulus (MPa) (6) |
| 2.1 | B | 7.4 | 0.40 | 19.9 | 21.4 | 3.5 | 356 |
| 2.2 | I | 8.4 | 0.14 | 24.3 | 13.8 | 2.6 | 483 |
| 2.3 | C | 17.8 | 0.74 | 15.6 | 57.4 | 9.4 | 315 |
| 2.4 | E | 26.5 | 1.52 | 12.1 | 87.6 | 11.2 | 303 |
| 2.5 | F | 34.3 | 13.1 | 14.5 | 30.1 | 4.2 | 381 |
| 2.6 | G | 41.0 | 1.07 | 25.1 | 268.0 | 61.1 | 430 |

| | | | | | | | |
|---|---|---|---|---|---|---|---|
| (1) Styrene content of ES interpolymer in mole percent. | | | | | | | |
| (2) Melt index of ES interpolymer determined per ASTM 1238 at 190°C/2.16 kg. | | | | | | | |
| (3) Tensile strength at break in megapascals. | | | | | | | |
| (4) Elongation at break in a percentage of the initial length. | | | | | | | |
| (5) Toughness determined by the area under the tensile curve in megajoules per cubic meter. | | | | | | | |
| (6) 2% secant modulus in megapascals. | | | | | | | |

### Example 3

In this example, Test 2.6 was repeated with substitution of the polystyrene component with another polystyrene having a weight average molecular weight of 300,000 and polydispersity of 2.4. As shown in Table 4, this resin blend has the desired toughness and relatively high modulus.

**Table 4**

| Test No. | ES Level (%) (1) | Tensile Strength (MPa) (2) | Elongation @ Break (%) (3) | Toughness (MJ/m³) (4) | Modulus (MPa) (5) |
|---|---|---|---|---|---|
| 3.1 | 40 | 17.5 | 207.0 | 44.4 | 382 |

| | | | | | |
|---|---|---|---|---|---|
| (1) ethylene/styrene interpolymer G (41.0 mole % styrene, 1.07 melt flow rate) mixed in as a percentage of the total polymer. | | | | | |
| (2) Tensile strength at break in megapascals. | | | | | |
| (3) Elongation at break in a percentage of the initial length. | | | | | |
| (4) Toughness determined by the area under the tensile curve in megajoules per cubic meter. | | | | | |
| (5) 2% secant modulus in megapascals. | | | | | |

### EXAMPLE 4

In this example, an ES interpolymer (Interpolymer A in Tables 1A and 1B) having 20.1 mole % (48.3 weight percent) styrene was blended, at 10 and 20 percent level, with a polystyrene resin as used in Example 1. The ES interpolymer contains approximately 4% amorphous polystyrene in the total polymer. As shown in Table 5, an ES interpolymer level up to 20% in the blends was insufficient for achieving a tough blend.

**Table 5**

| Test No. | ES Level (%) (1) | Tensile Strength (MPa) (2) | Elongation @ Break (%) (3) | Toughness (MJ/cu.m) (4) | Modulus (MPa) (5) |
|---|---|---|---|---|---|
| 4.1 | 10 | 27.4 | 4.1 | 0.6 | 869 |
| 4.2 | 20 | 31.6 | 5.6 | 1.1 | 800 |
| 4.3 | 20 | 36.2 | 6.5 | 1.3 | 855 |

| | | | | | |
|---|---|---|---|---|---|
| (1) ethylene/styrene interpolymer (20.1 mole % styrene, 0.2 melt flow rate) mixed in as a percentage of the total polymer. | | | | | |
| (2) Tensile strength at break in megapascals. | | | | | |
| (3) Elongation at break in a percentage of the initial length. | | | | | |
| (4) Toughness determined by the area under the tensile curve in megajoules per cubic meter. | | | | | |
| (5) 2% secant modulus in megapascals. | | | | | |

### COMPARATIVE EXPERIMENT A (Not an example of the present invention)

In this comparative experiment, the polystyrene in Example 1 was blended with a commercial styrene-butadiene-styrene tri-block interpolymer (SBS) (VECTOR™ 6241-D a registered trademark of and available from Dexco Polymers). As shown in Table 6, a 60/40: PS/SBS blend has a good elongation and desired toughness. However, the blend lacks stiffness (as indicated by the lower modulus values) compared to the PS/ES blends. A high modulus was desired for most applications of the polymer blends.

**Table 6**

| Test No. | SBS Level (%) **(1)** | Tensile Strength (MPa) **(2)** | Elongation @ Break (%) **(3)** | Toughness MJ/m³) **(4)** | Modulus (Mpa) **(5)** |
|---|---|---|---|---|---|
| 5.1* | 40 | 22.5 | 244.0 | 44.0 | 272 |

| | | | | | |
|---|---|---|---|---|---|
| * Not an example of the present invention. | | | | | |
| (1) VECTOR™ 6241-D brand SBS interpolymer (a registered trademark of and available from Dexco Polymers) mixed in as a percentage of the total polymer | | | | | |
| (2) Tensile strength at break in megapascals | | | | | |
| (3) Elongation at break in a percentage of the initial length | | | | | |
| (4) Toughness determined by the area under the tensile curve in megajoules per cubic meter | | | | | |
| (5) 2% secant modulus in megapascals | | | | | |

### EXAMPLE 5

### Preparation of ES Copolymer

An ethylene-styrene (ES) substantially random copolymer identified as H in tables 1A & B was employed in this example. This ES copolymer contains 76.9 weight (47.3 mol) percent styrene moiety and has a melt index of 0.92 as determined by ASTM D-1238 at 190°C/2.16 kg.

### Expandability Testing

The blends used in this example were those prepared in Example 1. The blends were compression-molded in a mold of approximately 1" (25.4 mm) in diameter and 0.1" (2.5 mm) in depth on a hot press that was maintained at approximately 180°C.

The disc-shaped specimens, three per formulation, were loaded in a pressure vessel on wire mesh trays lined with Teflon™ fluoropolymer. The trays were suspended by a support so as not to be in a direct contact with the liquid blowing agent that would be subsequently charged in and settled at the bottom of the vessel. Approximately 2.8 grams of isopentane was charged into the vessel. With its lid closed and the air purged out with nitrogen, the vessel was heated in an oil bath maintained at 60°C for about 6 days. The vessel was cooled down and the specimens were removed. The thickness of the specimens after blowing agent impregnation ranges from 70 mils (1.8 mm) to 127 mils (3.2 mm). Shortly after, one specimen per each formulation was cut into halves and the cut pieces were exposed to atmospheric steam for five minutes. As shown in Table 7, PS/ES blends absorb isopentane in excess of 10 parts per one hundred parts of polymer (pph) and expanded to reasonably low densities. The 90/10:PS/ES blend achieves the lowest density of 44 kg/m³.

In contrast, the pure polystyrene specimen absorbs less than 3 pph isopentane and expands to 94 kg/m³ density. The relatively high density foam which results with the 60/40:PS/ES blend was probably due to an excessively long exposure to steam. The blend foam showed a sign of shrinkage when taken out of the steam pot.

**Table 7**

| Expandability of PS/ES Blends Impregnated with Isopentane | | | | | |
|---|---|---|---|---|---|
| Test No. | Formulation (1) | Thickness (mm) | iC₅ Level (pph) | Foam Density(4) | |
| | | (2) | (3) | (lb/ft³) | (Kg/m³) |
| 5.1* | PS | 1.8 | 3.0 | 5.9 | 94 |
| 5.2 | PS/ES 90/10 | 2.1 | 14.3 | 2.7 | 44 |
| 5.3 | PS/ES 80/20 | 2.8 | 13.8 | 3.8 | 61 |
| 5.4 | PS/ES 70/30 | 3.2 | 11.6 | 4.8 | 77 |
| 5.5 | PS/ES 60/40 | 3.0 | 10.3 | 8.3 | 133 |

| | | | | | |
|---|---|---|---|---|---|
| * Not an example of the present invention. | | | | | |
| (1) PS = general purpose polystyrene having 200,000 weight average molecular weight; ES = ethylene-styrene copolymer made with 76.9 wt. % styrene and having 0.92 M.I. | | | | | |
| (2) Thickness of the specimen in millimeters. | | | | | |
| (3) Amount of isopentane contained in the specimen immediately after impregnation in parts per 100 parts of polymer. | | | | | |
| (4) Density of foam body achieved by expansion of fresh specimens in atmospheric steam for 5 minutes in both pounds per cubic foot and kilogram per cubic meter. | | | | | |

### Blowing Agent Retention

The blowing agent retention capability of the specimens impregnated with isopentane above was examined by periodically weighing the specimens during aging at an ambient temperature of 23°C. The monitoring continued for 8 months and the data were summarized in Table 10. Since the fractional loss of blowing agent was inversely proportional to the square of the thickness, the data need to be compared in terms of corrected aging time; corrected for 2 mm-thick specimens. For ease of comparison, the data were interpolated to give blowing agent retention at a discrete aging time as presented in Table 8. The data indicate that PS/ES blends retain isopentane well, much better that a pure polystyrene. PS/ES blends retain over 65% of the initial blowing agent for 3 months, while the polystyrene specimen losses one half of its blowing agent within a week.

**Table 8**

| **Retention of Isopentane by PS/ES Blends at 23°C.** | | | | | | | | |
|---|---|---|---|---|---|---|---|---|
| Test. No. | Formulation (1) | Isopentane Retention After Aging at 23°C for the Period (days) (2) | | | | | | |
| | | 0 | 7 | 14 | 30 | 60 | 90 | 120 |
| 2.1* | PS | 2.8 | 1.4 | 1.2 | 0.9 | 0.5 | 0.4 | 0.3 |
| 2.2 | PS/ES 90/10 | 14.9 | 12.5 | 11.8 | 10.9 | 9.9 | 9.4 | 9.0 |
| 2.3 | PS/ES 80/20 | 12.9 | 11.7 | 11.2 | 10.6 | 9.8 | 9.4 | 9.1 |
| 2.4 | PS/ES 70/30 | 10.3 | 9.5 | 9.1 | 8.6 | 8.0 | 7.7 | 7.4 |
| 2.5 | PS/ES 60/40 | 10.0 | 8.7 | 8.3 | 7.6 | 7.0 | 6.6 | 6.4 |

| | | | | | | | | |
|---|---|---|---|---|---|---|---|---|
| * Not an example of this invention. | | | | | | | | |
| (1) PS = general purpose polystyrene having 200,000 weight average molecular weight; ES = ethylene/styrene copolymer made with 76.9 wt. percent styrene and having 0.92 M.I. | | | | | | | | |
| (2) Retention of isopentane by 2 mm-thick specimens after aging for the specified period at 23°C in parts per one hundred parts of polymer. | | | | | | | | |

The ethylene-styrene copolymer prepared above was compression-molded to a disc by the same procedure as above. The disc specimen was impregnated with HCFC-141b at 60°C for 8 days per the above procedure. Retention of the blowing agent by the specimen was monitored by periodically weighing during aging at an ambient temperature of 23°C for 6 days. The specimen thickness was about 3 mm. As shown in Table 9, the specimen retains HCFC-141b blowing agent reasonably well.

**Table 9**

| Retention of R-141b by an Ethylene/Styrene Copolymer | | | | | |
|---|---|---|---|---|---|
| | Elapsed Time (days) | | | | |
| | 0. | 1 | 3 | 4 | 6 |
| R-141b Retention @ 23°C (pph) | 3.2 | 3.0 | 2.9 | 2.9 | 2.9 |

### EXAMPLES 6 - 13

### Interpolymer preparations and characteristics:

### Preparation of Interpolymers J, K, & L

Polymer was prepared in a 400 gallon agitated semi-continuous batch reactor. The reaction mixture consisted of approximately 250 gallons a solvent comprising a mixture of cyclohexane (85wt%) & isopentane (15wt%), and styrene. Prior to addition, solvent, styrene and ethylene were purified to remove water and oxygen. The inhibitor in the styrene was also removed. Inerts were removed by purging the vessel with ethylene. The vessel was then pressure controlled to a set point with ethylene. Hydrogen was added to control molecular weight. Temperature in the vessel was controlled to set-point by varying the jacket water temperature on the vessel. Prior to polymerization, the vessel was heated to the desired run temperature and the catalyst components: Titanium: (N-1,1-dimethylethyl)dimethyl(1-(1,2,3,4,5-eta)-2,3,4,5-tetramethyl- 2,4-cyclopentadien-1-yl)silanaminato))(2-)N)-dimethyl, CAS# 135072-62-7, Tris(pentafluorophenyl)boron, CAS# 001109-15-5, Modified methylalumin-oxane Type 3A, CAS# 146905-79-5, were flow controlled, on a mole ratio basis of 1/3/5 respectively, combined and added to the vessel. After starting, the polymerization was allowed to proceed with ethylene supplied to the reactor as required to maintain vessel pressure. In some cases, hydrogen was added to the headspace of the reactor to maintain a mole ratio with respect to the ethylene concentration. At the end of the run, the catalyst flow was stopped, ethylene was removed from the reactor, about 1000 ppm of Irganox™ 1010 (a registered trademark of CIBA-GEIGY) anti-oxidant was then added to the solution and the polymer was isolated from the solution. Catalyst efficiency was generally greater than 100,000 lbs polymer per lb. Ti. The resulting polymers were isolated from solution by either stripping with steam in a vessel or by use of a devolatilizing extruder. In the case of the steam stripped material, additional processing was required in extruder-like equipment to reduce residual moisture and any unreacted styrene.

| Interpolymer | Solvent loaded | | Styrene loaded | | Pressure | | Temp. | Total H₂ Added | Run Time | Polymer in Solution |
|---|---|---|---|---|---|---|---|---|---|---|
| | lb | kg | lb | kg | Psig | kPa | °C | Grams | Hours | Wt. % |
| (J) | 252 | 114 | 1320 | 599 | 40 | 276 | 60 | 0 | 6.5 | 18.0 |
| (K) | 839 | 381 | 661 | 300 | 105 | 724 | 60 | 53.1 | 4.8 | 11.6 |
| (L) | 1196 | 542 | 225 | 102 | 70 | 483 | 60 | 7.5 | 6.1 | 7.2 |

| Interpolymer | Melt Index I₂ | Total Wt% Styrene in Polymer* | Talc Level Wt % | Isolation Method |
|---|---|---|---|---|
| (J) | 1.83 | 81.6 | <2.5 | Steam Strip |
| (K) | 2.6 | 45.5 | 0 | Extruder |
| (L) | 0.03 | 29.8 | 0 | Extruder |

| | | | | |
|---|---|---|---|---|
| * Total weight percent styrene measured via Fourier Transform Infrared (FTIR) technique. | | | | |

The interpolymer and vinyl aromatic polymer characteristics were given in table 10. The unblended polymers provide the comparative experiments.

**Table 10**

| Intorpolymer and vinylidene aromatic polymer blend components | | | | |
|---|---|---|---|---|
| | | Blend Component | | |
| | (J) | (K) | (L) | (PS)*² |
| **Composition** | | | | |
| wt. % atactic Polystyrene in Interpolymer⁴ | 8.2 | 10.3 | 1 | 100 |
| wt. % Styrene⁴ | 69.9 | 43.4 | 29.3 | --- |
| wt. % Ethylene | 30.1 | 56.6 | 70.7 | --- |
| mol. % Styrene | 40 | 17.1 | 10 | --- |
| mol. % Ethylene | 60 | 82.9 | 90 | --- |
| **Molecular Weight** | | | | |
| MFR, I₂ | 1.83 | 2.62 | 0.03 | --- |
| Mₙx10⁻³ | 71 | 66.8 | 118.1 | --- |
| M_{w}/Mₙ | 2.63 | 1.89 | 2.01 | --- |

| **Physical Properties** | | | | |
|---|---|---|---|---|
| Density. g/cc | 1.0175 | 0.9626 | 0.943 | --- |
| Tm, °C | N.D. | 49.6 | 71.3 | --- |
| % Crystallinity | N.D. | 4.8 | 14.7 | --- |
| Tc, °C | N.D. | 22.1 | 58.1 | --- |
| Tg(DSC) | 24.7 | -12 | -17.2 | 106.3 |

| **Mechanical Properties** | | | | |
|---|---|---|---|---|
| Shore A | 98 | 75 | 88 | 98 |
| Tensile Modulus, MPa | 703.3 | 6.5 | 20 | 1860.3 |
| Flexural Modulus, MPa | 620.6 | 68.8 | 62.1 | 3135.8 |
| Yield Stress, MPa | 7.5 | 1.3 | 2.4 | 39.5 |
| % Strain @ Break | 248.3 | 475.3 | 377.5 | 1.6 |
| Stress @ Break, MPa | 17 | 22.6 | 34.3 | 38.8 |
| Energy @ Break, N·m | 98.2 | 102.2 | 145.5 | 1.1 |
| % Stress Relaxation (50%/10min) | 93.5 | 38 | 30.2 | CBM³ |

| **Melt Rheology** | | | | |
|---|---|---|---|---|
| ηx10⁻⁵ (0.1 rad/sec), 0.1 pascal S (Poise) | 1.01 | 1.05 | 16.6 | 4.48 |
| η(100/0.1) | 0.14 | 0.15 | 0.16¹ | 0.018 |
| Tan δ (0.1 rad/sec) | 9.98 | 4.2 | 2.37 | 2.59 |

| | | | | |
|---|---|---|---|---|
| * Not an example of the present invention | | | | |
| 1 ratio of η(1.6)/ η(0.1) | | | | |
| 2 Styron™ 685D is a general purpose polystyrene commercially available from and a registered trademerk of The Dow Chemical Company, Midland, MI. | | | | |
| 3 Cannot be measured. | | | | |
| 4 Measured by NMR technique. | | | | |

Test parts and characterization data for the interpolymers and their blends were generated according to the following procedures:
**Compression Molding:** Samples were melted at 190°C for 3 minutes and compression molded at 190°C under 9072kg (20,000 lb). of pressure for another 2 minutes. Subsequently, the molten materials were quenched in a press equilibrated at room temperature.
**Density:** The density of the samples was measured according to ASTM-D792.
**Differential scanning Calorimetry (PSC):** A Dupont DSC-2920 was used to measure the thermal transition temperatures and heat of transition for the interpolymers. In order to eliminate previous thermal history, samples were first heated to 200°C. Heating and cooling curves were recorded at 10°C/min. Melting (from second heat) and crystallization temperatures were recorded from the peak temperatures of the endotherm and exotherm, respectively.
**Melt Shear Rheology:** Oscillatory shear rheology measurements were performed with a Rheometrics RMS-800 rheometer Rheological properties were monitored at an isothermal set temperature of 190°C in a frequency sweep mode. In tabulated data, η is the viscosity and η(100/0.1) is the viscosity ratio of values recorded at 100/0.1 rad/sec frequencies.
**Mechanical Testing:**
   Shore A hardness was measured at 23°C following ASTM-D240.
   Flexural modulus was evaluated according to ASTM-D790.
   Tensile properties of the compression molded samples were measured using an Instron 1145 tensile machine equipped with an extensiometer. ASTM-D638 samples were tested at a strain rate of 5 min⁻¹. The average of four tensile measurements is given. The yield stress and yield strain were recorded at the inflection point in the stress/strain curve. The Energy at break is the area under the stress/strain curve.
**Tensile Stress Relaxation:** Uniaxial tensile stress relaxation was evaluated using an Instron 1145 tensile machine. Compression molded film (∼ 20 mil, 0.0508 cm., thick) with a 1" (2.54 cm) gauge length was deformed to a strain level of 50% at a strain rate of 20 min⁻¹. The force required to maintain 50% elongation was monitored for 10 min. The magnitude of the stress relaxation is defined as (fi-f_{f}/fᵢ) where fᵢ is the initial force and f_{f} is the final force.
**Thermomechanical Analysis (TMA):** Data were generated using a Perkin Elmer TMA 7 series instrument. Probe penetration was measured to 1 mm depth on 2 mm thick compression molded parts using a heating rate of 5°C/min and a load of 1 Newton.

### Examples 6-8

**Blend Preparation:** Three blend compositions, examples 6, 7 and 8, were prepared from interpolymer (J) and vinyl aromatic polymer (D) above in weight ratios of (J)/(D) of 90/10, 70/30 and 50/50 with a Haake mixer equipped with a Rheomix 3000 bowl. The blend components were first dry blended and then fed into the mixer equilibrated at 190°C. Feeding and temperature equilibration took about 3 to 5 minutes. The molten material was mixed at 190°C and 40 rpm for 10 minutes.

The characterization data for these blends and the blend components is given in table 11.

**Table 11**

| | Blend polymer or Example No. | | | | |
|---|---|---|---|---|---|
| | (J)* | (D)* | 6 | 7 | 8 |
| **Blend Composition, wt. ratio (J)/(D)** | 100/0 | 0/100 | 90/10 | 70/30 | 50/50 |
| **Mechanical Properties** | | | | | |
| Shore A hardness | 98 | 98 | 96 | 97 | 98 |
| Tensile Modulus, MPa | 703.3 | 1860.3 | 654.3 | 1202.5 | 1696.9 |
| Flexural Modulus, Mpa | 620.6 | 3135.8 | N.D.** | N.D. ** | N.D** |
| Yield Stress, MPa | 7.5 | 39.5 | 6.4 | 9.9 | 24.5 |
| % Strain @ Break | 248.3 | 1.6 | 230.5 | 184.3 | 12.7 |
| Stress @ Break, MPa | 17 | 38.8 | 19.4 | 17.4 | 26 |
| Energy @ Break. N·m | 98.2 | 1.1 | 114.6 | 97.4 | 11.9 |
| % Stress Relaxation (50%/10min) | 93.5 | CBM¹ | 90.7 | 85.7 | CBM¹ |
| TMA², °C | 66 | 118 | 74 | 84 | 103 |

| **Melt Rheology** | | | | | |
|---|---|---|---|---|---|
| η×10⁻² (0.1 rad/sec), 0.1 Pascal .S (Poise) | 1.01 | 4.46 | 1.2 | 1.37 | 2.36 |
| η (100/0.1) | 0.14 | 0.016 | 0.12 | 0.089 | 0.049 |
| Tan δ (0.1 rad/sec) | 9.98 | 2.59 | 9.09 | 4.66 | 2.7 |

| | | | | | |
|---|---|---|---|---|---|
| * Not an example of the present invention. | | | | | |
| ** Not determined. | | | | | |
| 1 cannot be measured. | | | | | |
| 2 Temperature to 1 mm probe depth. | | | | | |

Olefin-based polymers generally show poor compatibility with vinyl aromatic polymers, and hence to achieve good performance characteristics there is usually a need to provide some form of compatibilization technology. This poor compatibility is generally associated with low toughness.

Table 11, however, shows that the blend composition examples 6, 7 and 8 all have good mechanical integrity, and have not lost any strength performance as evidenced by the stress, strain and energy at break. The 50/50 composition, although showing a lower toughness than the other two compositions, is nevertheless a factor of 10 higher than the unmodified vinyl aromatic polymer.

Further, the blends retain an unexpected level of stress relaxation compared to what may be expected from the component polymers. The high temperature performance of the compositions as shown by probe penetration to 1 mm depth in a thermomechanical analysis (TMA) test was greatly improved in the blends. Example 8, containing 50 wt. percent of polystyrene shows resistance to penetration approaching that of the polystyrene.

The melt rheology data for the three blend examples 6, 7 and 8 shows that the low shear performance (0.1 rad/sec) can be manipulated by blending, with the blends having low viscosities. Low tan δ values were found at low shear rates for examples 7 and 8. This translates to higher melt elasticity and improved part forming characteristics under certain melt processing operations, compared to unmodified interpolymers.

### Examples 9-11

**Blend Preparation:** Three blend compositions, examples 9, 10 and 11, were prepared from interpolymer (K) and vinyl aromatic polymer (D) above in weight ratios of (K)/(D) of 85/15, 70/30 and 50/50 with a Haake mixer equipped with a Rheomix 3000 bowl. The blend components were first dry blended and then fed into the mixer equilibrated at 190°C. Feeding and temperature equilibration takes about 3 to 5 minutes. The molten material was mixed at 190°C and 40 rpm for 10 minutes.

The characterization data for these blends and the blend components is given in table 12.

**Table 12**

| | **Blend Polymer or Example No.** | | | | |
|---|---|---|---|---|---|
| | (K)* | (PS)* | 9 | 10 | 11 |
| **Blend Composition, wt. ratio (K)/(PS)** | 100/0 | 0/100 | 85/15 | 70/30 | 50/50 |

| **Mechanical Properties** | | | | | |
|---|---|---|---|---|---|
| Shore A | 75 | 98 | 76 | 89 | 97 |
| Tensile Modulus, MPa | 6.5 | 1860.3 | 13.8 | 68.9 | 661.9 |
| Flexural Modulus, MPa | 68.8 | 3135.8 | 52.4 | 111.7 | 688.8 |
| Yield Stress, MPa | 1.3 | 39.5 | 2 | 4.3 | 9.4 |
| % Strain @ Break | 475.3 | 1.6 | 481.3 | 459.4 | 4.4 |
| Stress. @ Break, MPa | 22.6 | 38.8 | 20.3 | 10.3 | 9.5 |
| Energy @ Break, N·m | 102.2 | 1.1 | 89.1 | 74.4 | 1.2 |
| % Stress Relaxation (50%/10min) (50%/10min) | 39 | CBM¹ | 51.2 | 66.1 | CBM¹ |

| **Melt Rheology** | | | | | |
|---|---|---|---|---|---|
| ηx10⁻⁵(0.1 rad/sec), 0.1Pascal.S (Poise) | 1.05 | 4.48 | 1.07 | 1.26 | 2.1 |
| η (100/0.1) | 0.15 | 0.018 | 0.12 | 0.093 | 0.057 |
| Tan δ (0.1 rad/sec) | 4.2 | 2.59 | 3.43 | 3.49 | 2.91 |

| | | | | | |
|---|---|---|---|---|---|
| * Not an example of the present invention. | | | | | |
| 1 Cannot be measured. 2 Not measured. | | | | | |

Table 12 shows that the blend composition examples 9, 10 and 11 all have good mechanical integrity, and have not lost any strength performance as evidenced by the stress, strain and energy at break compared to the individual component polymers. The 50/50 composition, although showing a lower toughness than the other two compositions, was nevertheless higher than the unmodified vinyl aromatic polymer.

Further, blends 9 and 10 show high levels of stress relaxation compared to the component interpolymer.

The melt rheology data for the three blend examples 9, 10 and 11 shows that the low shear performance (0.1 rad/sec) can be manipulated by blending, with the blends having low viscosities.

### Examples 12 & 13

**Blend Preparation:** Two blend compositions, examples 12 and 13, were prepared from interpolymer (L) and vinyl aromatic polymer (D) above in weight ratios of (L)/(D) of 75/25 and 50/50 with a Heake mixer equipped with a Rheomix 3000 bowl. The blend components were first dry blended and then fed into the mixer equilibrated at 190°C. Feeding and temperature equilibration took about 3 to 5 minutes. The molten material was mixed at 190°C and 40 rpm for 10 minutes.

The characterization data for these bleeds and the blend components is given in table 13.

**Table 13**

| | **Blend polymer or Example No.** | | | |
|---|---|---|---|---|
| | (L)* | (PS)* | 12 | 13 |
| **Blend Composition, wt. ratio (L)/(PS)** | 100/0 | 0/100 | 75/25 | 50/30 |

| **Mechanical Properties** | | | | |
|---|---|---|---|---|
| Shore A | 88 | 98 | 95 | 97 |
| Tensile Modulus, MPa | 20 | 1860.3 | 194.4 | 1313.5 |
| Flexural Modulus, MPa | 62.1 | 3135.8 | N.D. | N.D. |
| Yield Stress, MPa | 2.4 | 39.5 | 9.8 | 15.6 |
| % Strain @ Break | 377.5 | 1.6 | 199.8 | 20.6 |
| Stress @ Break, MPa | 34.3 | 38.8 | 14.2 | 19.5 |
| Energy @ Break, N·m | 145.5 | 1.1 | 92.6 | 16.4 |
| % Stress Relaxation (50%/10min) | 30.2 | ND** | 46 | ND** |

| **Melt Rheology** | | | | |
|---|---|---|---|---|
| ηx10⁻⁵ (0.1 rad/sec), 0.1 Pascal.S (Poise) | 16.6 | 4.48 | 21.1 | 11.4 |
| η (100/0.1) | 0.16⁴ | 0.018 | 0.012 | 0.023 |
| Tan δ (0.1 rad/sec) | 2.37 | 2.59 | 0.64 | 1.32 |

| | | | | |
|---|---|---|---|---|
| * Not an example of the present invention. | | | | |
| ** not determined. | | | | |

The examples 12 & 13 show the excellent compatibility with high olefin-containing interpolymers, via the mechanical, property data. The blends show a high yield stress, and good strain at break values. Further, blend 12 retains an unexpected level of stress relaxation compared to interpolymer (L).

The blends both show low tan S values; this translates to higher melt elasticity and improved part forming characteristics under certain melt processing operations compared to either blend component.

### EXAMPLE 14

### A. Preparation of Ethylene/Styrene Copolymers

Ethylene/styrene capolymers were made using (tert-butyl-amido)dimethyl(tetramethyl-eta5-cyclopentadienyl)silane dimethyl-titanium (IV) catalyst and tris (pentafluorophenyl) borane cocatalyst according to the following procedure- A two liter stirred reactor was charged with about 360 g of mixed alkane solvent (Isopar-E™ from and registered trademark of Exxon Chemicals Inc.) and about 460 g of styrene comonomer. Hydrogen was added to the reactor by differential pressure expansion from a 75 mL addition tank. The reactor was heated to 90°C and the reactor was saturated with ethylene at the desired pressure. Catalyst and cocatalyst were mixed in a dry box by pipeting the desired amount of 0.005 M solution of cocatalyst in toluene into a solution of a catalyst in toluene. The resulting solution was transferred to a catalyst addition tank and injected into the reactor. The polymeritation was allowed to proceed with ethylene on demand. Additional charges of catalyst and cocatalyst were added to the reactor periodically. After 20 minutes the polymer solution was removed from the reactor and quenched with isopropyl alcohol. A hindered phenol antioxidant (Irganox™ 1010 available from and a registered trademark of Ciba Geigy Corp.), 100 mg, was added to the polymers. Volatiles were removed from the polymers in a reduced pressure vacuum oven at 135°C for about 20 hrs. The ethylene and delta H₂ pressures employed in the preparation of the ethylene/styrene copolymer and the melt index (I₂) and styrene content in the resultant copolymer are provided in the following table 14.

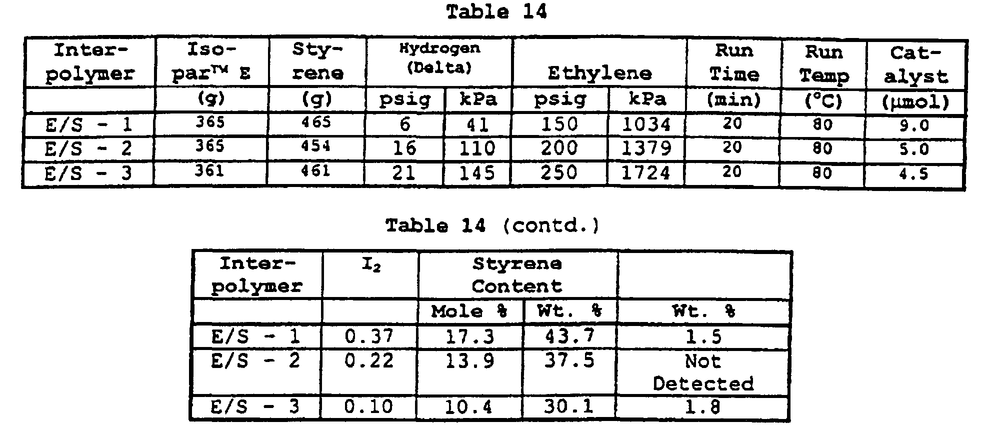

### B. Preparation of Injection Molded Samples for Testing

The components of Table 15 were compounded between 190°C and 210°C on a Baker Perkins MPC corotating 30 mm twin screw V30 mixer followed by a vented 38 mm single screw extruder. The polymer melt was passed through a two hole die and the polymer strands were cooled in a water bath and cut into pellets.

The resins were injected molded on a Demag D100-75 injection molder equipped with a 31 mm diameter barrel and a mold containing cavities for the specimens used in property testing.

**Table 15**

| Component Designation | COMPONENT | Wt. Percent |
|---|---|---|
| U | Polymer Modifier | 2.5 |
| R | HIPS XZ-95198.00¹ | 79.9 |
| S | TBBA² | 8.3 |
| S | Saytex™ 8010³ | 6.0 |
| T | Antimony Oxide | 3.3 |

| | | |
|---|---|---|
| 1 A high impact polystyrene available from The Dow Chemical Company having the following properties: melt flow rate = 3 g/10 min. @ 200°C/5 kg and an Izod impact strength of 2.2 ft-lb/inch (12 kgcm/cm). | | |
| 2 Tetrabromo bisphenol A. | | |
| 3 A brominated flame retardant commercially available from and a registered trademark of Albemarle. | | |

The test results of the molded ignition resistant polystyrene (IRPS) blends are provided in the following table 16.

**Table 16**

| | E/S-1 | E/S-2 | E/S-3 | Kraton 1102^{a}* |
|---|---|---|---|---|
| Instrumented Dart Impact Strength, | | | | |
| in-1b | 50 | 65 | 40 | 50 |
| kg-cm | 58 | 75 | 46 | 58 |
| Melt Flow Rate (g/10 min @ 200°C/5 kg | 7.9 | 7.6 | 7.5 | 6 |
| Vicat Softening | | | | |
| Temp., °F | 202 | 203 | 202 | 203 |
| °C | (94.4) | (95) | (94.4) | (95) |
| Tensile | | | | |
| Modulus, psi | 313,000 | 287,000 | 302,000 | 282,000 |
| MPa | 2,158 | 1,978 | 2,082 | 1,944 |
| Tensile Yield | | | | |
| psi | 3,980 | 3,980 | 3,970 | 3,830 |
| MPa | 27 | 27 | 27 | 26 |
| Tensile Elong. at rupture, % | 80 | 60 | 80 | 90 |
| Gardner Impact, | | | | |
| in.-1b. | 157 | 137 | 73 | 90 |
| kg-cm | 181 | 158 | 84 | 104 |
| UL-94 Flammability Rating at 2.0 mm | V-2^{b} | V-2^{b} | V-2^{b} | V-2^{b} |

| | | | | |
|---|---|---|---|---|
| * Not an example of the present invention. | | | | |
| **a** A 70/30 styrene-butadiene tri-block rubber (SBS copolymer) a registered trademark of and from Shell. Kraton™ 1102 has the following properties: melt flow rate = 12 g/10 min @ 200°C/5 kg. | | | | |
| **b *This numerical rating is not intended to reflect hazards presented by this or any other material under actual fire conditions.*** | | | | |

The total energy absorbed in the Gardner impact test ranged from 73 to 157 in-lb (84 to 181 kg-cm) for the E/S copolymers as compared to 90 in-lb (104 kg-cm) for the SBS copolymer. This range of values indicates : (1) that the impact strength of a flame resistant HIPS can be improved by the addition of ES interpolymers; (2) that the impact strength of the ignition resistant polystyrene (IRPS) is affected by the composition of the E/S copolymer; and (3) that the impact strength of the IRPS containing interpolymers can be comparable or greater than that containing typical SBS, the impact modifiers which are currently used commercially.

## Claims

1. A blend of polymeric materials comprising
(A) from 35 to 99 weight percent of at least one interpolymer containing
(1) from 1 to 65 mole percent of
(a) at least one vinylidene aromatic monomer, or
(b) at least one hindered aliphatic vinylidene monomer, or
(c) a combination of at least one vinylidene aromatic monomer and at least one hindered aliphatic vinylidene monomer, and
(2) from 35 to 99 mole percent of at least one aliphatic α-olefin having from 2 to 20 carbon atoms; which interpolymer has a distribution of the monomers that can be described by the Bernoulli statistical model or by a first or second order Markovian statistical model; and
(B) from 1 to 65 weight percent of
(1) at least one homopolymer of a vinylidene aromatic monomer, or
(2) at least one interpolymer of one or more vinylidene aromatic monomers and/or one or more hindered aliphatic vinylidene monomers, or
(3) at least one of (1) or (2) which additionally contains an impact modifier, or
(4) a combination of any two or more of (1), (2) or (3).

2. A blend of Claim 1 wherein component (A) is in an amount of from 40 to 97 weight percent, based on the combined weight of components (A) and (B); and component (B) is in an amount of from 60 to 3 weight percent, based on the combined weight of components (A) and (B).

3. A blend of Claim 1 wherein component (A) is in an amount of from 40 to 95 weight percent, based on the combined weight of components (A) and (B); and component (B) is in an amount of from 60 to 5 weight percent, based on the combined weight of components (A) and (B).

4. A blend of any preceding claim wherein
(i) component (A2) contains from 2 to 12 carbon atoms:
(ii) the vinylidene aromatic monomer(s) of component (B) is represented by the following general formula: 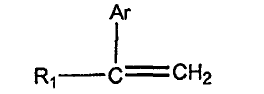 wherein R¹ is selected from the group of radicals consisting of hydrogen and alkyl radicals containing three carbons or less, and Ar is a phenyl group or a phenyl group substituted with from 1 to 5 substituents selected from the group consisting of halo, C₁₋₄-alkyl, and C₁₋₄-haloalkyl.

5. A blend of any preceding claim wherein the interpolymerizable monomer of component (B) is selected from the group consisting of α-methyl styrene, N-phenyl maleimide, N-alkyl maleimide, acrylamide, acrylonitrile, methacrylonitrile, maleic anhydride, acrylic acid, C₁₋₄-alkyl acrylates or C₁₋₄-alkyl methacrylates.

6. A blend of any preceding claim wherein component (B) is polystyrene or polystyrene containing an impact modifier.

7. A blend of any preceding claim wherein component (A1a) is styrene and component (A2) is ethylene or a combination of ethylene and at least one of propylene, 4-methyl pentene, butene-1 hexene-1 or octene-1.

8. A blend of any preceding claim wherein component (A1a) is styrene; component (A2) is ethylene or a combination of ethylene and at least one of propylene, 4-methyl pentene, butene-1, hexene-1 or octene-1; and component (B) is polystyrene or polystyrene containing an impact modifier.

9. A fabricated article comprising a blend of polymeric materials consisting of
(A) from 35 to 99 weight percent of at least one interpolymer as defined in claim 1
(A) and
(B) from 1 to 65 weight percent of at least one polymer as defined in claim 1 (B)

10. Use of a blend of any of claims 1-8 in the preparation of a fiber, foam or latex.

11. A foamable composition comprising
(I) at least one blowing agent; and
(II) at least one interpolymer or blend of interpolymers consisting of
(A) from 1 to 100 percent by weight of at least one interpolymer comprising
(1) from 1 to 65 mole percent of (a) at least one vinylidene aromatic monomer, or (b) at least one hindered aliphatic vinylidene monomer, or (c) a combination of at least one vinylidene aromatic monomer and at least one hindered aliphatic vinylidene monomer, and
(2) from 35 to 99 mole percent of at least one aliphatic α-olefin having from 2 to 20 carbon atoms; and
(B) from 0 to 99 percent by weight of at least one homopolymer of a vinylidene aromatic monomer or a hindered aliphatic vinylidene monomer, or at least one interpolymer of one or more vinylidene aromatic monomers and/or one or more hindered aliphatic vinylidene monomers and optionally one or more polymerizable ethylenically unsaturated monomers other than the one or more vinylidene aromatic monomers or the one or more hindered aliphatic vinylidene monomers.

## Patentansprüche

1. Mischung von polymeren Materialien, umfassend
(A) von 35 bis 99 Gew.-% wenigstens eines Interpolymeren, das enthält
(1) von 1 bis 65 Mol-% von
(a) wenigstens einem vinylidenaromatischen Monomeren, oder
(b) wenigstens einem gehinderten aliphatischen Vinylidenmonomeren, oder
(c) einer Kombination von wenigstens einem vinylidenaromatischen Monomeren und wenigstens einem gehinderten aliphatischen Vinylidenmonomeren,
und
(2) von 35 bis 99 Mol-% wenigstens eines aliphatischen
α-Olefins mit von 2 bis 20 Kohlenstoffatomen,
wobei dieses Interpolymere eine Verteilung der Monomeren hat, die durch das statistische Bernoulli-Modell oder durch ein statistisches Markovian-Modell erster oder zweiter Ordnung beschrieben werden kann, und
(B) von 1 bis 65 Gew.-% von
(1) wenigstens einem Homopolymeren eines vinylidenaromatischen Monomeren, oder
(2) wenigstens einem Interpolymeren von einem oder mehreren vinylidenaromatischen Monomeren und/oder einem oder mehreren gehinderten aliphatischen Vinylidenmonomeren, oder
(3) wenigstens einem von (1) oder (2), das zusätzlich einen Schlagzähmacher enthält, oder
(4) einer Kombination von einem beliebigen zwei oder mehr von (1), (2) oder (3).

2. Mischung nach Anspruch 1, worin Komponente (A) in einer Menge von 40 bis 97 Gew.-%, bezogen auf das kombinierte Gewicht von Komponenten (A) und (B), vorliegt, und Komponente (B) in einer Menge von 60 bis 3 Gew.-%, bezogen auf das kombinierte Gewicht von Komponenten (A) und (B), vorliegt.

3. Mischung nach Anspruch 1, worin Komponente (A) in einer Menge von 40 bis 95 Gew.-%, bezogen auf das kombinierte Gewicht von Komponenten (A) und (B), vorliegt, und Komponente (B) in einer Menge von 60 bis 5 Gew.-%, bezogen auf das kombinierte Gewicht von Komponenten (A) und (B), vorliegt.

4. Mischung nach einem der vorhergehenden Ansprüche,
worin
(i) Komponente (A2) 2 bis 12 Kohlenstoffatome enthält,
(ii) das/die vinylidenaromatische/n Monomere/n von Komponente (B) durch die folgende allgemeine Formel wiedergegeben wird/werden: 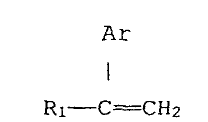 worin R¹ aus der Gruppe von Resten ausgewählt ist, die aus Wasserstoff und Alkylresten mit drei Kohlenstoffatomen oder weniger besteht, und Ar eine Phenylgruppe oder eine mit 1 bis 5 Substituenten, ausgewählt aus der aus Halogen, C₁₋₄-Alkyl und C₁₋₄-Halogenalkyl bestehenden Gruppe, substituierte Phenylgruppe ist.

5. Mischung nach einem der vorhergehenden Ansprüche, worin das interpolymierisierbare Monomere von Komponente (B) aus der Gruppe ausgewählt ist, die aus α-Methylstyrol, N-Phenylmaleinimid, N-Alkylmaleinimid, Acrylamid, Acrylnitril, Methacrylnitril, Maleinanhydrid, Acrylsäure, C₁₋₄-Alkylacrylaten oder C₁₋₄-Alkylmethacrylaten besteht.

6. Mischung nach einem der vorhergehenden Ansprüche, worin Komponente (B) Polystyrol oder einen Schlagzähmacher enthaltendes Polystyrol ist.

7. Mischung nach einem der vorhergehenden Ansprüche, worin Komponente (A1a) Styrol ist und Komponente (A2) Ethylen oder eine Kombination von Ethylen und wenigstens einem von Propylen, 4-Methylpenten, Buten-1, Hexen-1 oder Octen-1 ist.

8. Mischung nach einem der vorhergehenden Ansprüche, worin Komponente (A1a) Styrol ist, Komponente (A2) Ethylen oder eine Kombination von Ethylen und wenigstens einem von Propylen, 4-Methylpenten, Buten-1, Hexen-1 oder Octen-1 ist, und Komponente (B) Polystyrol oder einen Schlagzähmacher enthaltendes Polystyrol ist.

9. Hergestellter Gegenstand, umfassend eine Mischung von polymeren Materialien, bestehend aus
(A) von 35 bis 99 Gew.-% wenigstens eines Interpolymeren, wie in Anspruch 1 (A) definiert, und
(B) von 1 bis 65 Gew.-% wenigstens eines Polymeren, wie in Anspruch 1 (B) definiert.

10. Verwendung einer Mischung nach einem der Ansprüche 1 bis 8 bei der Herstellung einer Faser, eines Schaums oder eines Latex.

11. Schäumbare Zusammensetzung, umfassend
(I) wenigstens ein Blähmittel, und
(II) wenigstens ein Interpolymeres oder eine Mischung von Interpolymeren, bestehend aus
(A) von 1 bis 100 Gew.-% wenigstens eines Interpolymeren, umfassend
(1) von 1 bis 65 Mol-% von (a) wenigstens einem vinylidenaromatischen Monomeren, oder (b) wenigstens einem gehinderten aliphatischen Vinylidenmonomeren, oder (c) einer Kombination von wenigstens einem vinylidenaromatischen Monomeren und wenigstens einem gehinderten aliphatischen Vinylidenmonomeren, und
(2) von 35 bis 99 Mol-% wenigstens eines aliphatischen α-Olefins mit von 2 bis 20 Kohlenstoffatomen, und
(B) von 0 bis 99 Gew.-% von wenigstens einem Homopolymeren von einem oder mehreren vinylidenaromatischen Monomeren und/oder einem oder mehreren gehinderten aliphatischen Vinylidenmonomeren oder wenigstens einem Interpolymeren von einem oder mehreren vinylidenaromatischen Monomeren und/oder einem oder mehreren gehinderten aliphatischen Vinylidenmonomeren, und wahlweise einem oder mehreren polymerisierbaren ethylenartig ungesättigten Monomeren, verschieden von dem einem oder den mehreren vinylidenaromatischen Mononomeren oder dem einen oder den mehreren gehinderten aliphatischen Vinylidenmonomeren,

## Revendications

1. Mélange de matières polymères qui comprend :
(A) 35 à 99 % en poids d'au moins un copolymère contenant :
(1) 1 à 65 % en moles de
(a) au moins un monomère aromatique vinylidène, ou de
(b) au moins un monomère aliphatique vinylidène encombré, ou de
(c) une combinaison d'au moins un monomère aromatique vinylidène et d'au moins un monomère aliphatique vinylidène encombré, et
(2) 35 à 99 % en moles d'au moins une α-oléfine aliphatique ayant 2 à 20 atomes de carbone,
ledit copolymère ayant une distribution des monomères qui peut être décrite par le modèle statistique de Bernoulli ou par un modèle statistique de Markovian du premier ordre ou du second ordre, et
(B) 1 à 65 % en poids de :
(1) au moins un homopolymère d'un monomère aromatique vinylidène, ou
(2) au moins un copolymère d'un ou plusieurs monomères aromatiques vinylidène et/ou d'un ou plusieurs monomères aliphatiques vinylidène encombrés, ou
(3) au moins l'un de (1) et (2), qui contient en plus un agent modifiant la résistance aux chocs, ou
(4) une combinaison quelconque de deux ou plus de (1), (2) et (3).

2. Mélange selon la revendication 1, dans lequel le constituant (A) figure en une proportion de 40 à 97 % en poids par rapport au poids combiné des constituants (A) et (B), et le constituant (B) figure en une proportion de 60 à 3 % en poids par rapport au poids combiné des constituants (A) et (B).

3. Mélange selon la revendication 1, dans lequel le constituant (A) figure en une proportion de 40 à 95 % en poids par rapport au poids combiné des constituants (A) et (B), et le constituant (B) figure en une proportion de 60 à 5 % en poids par rapport au poids combiné des constituants (A) et (B).

4. Mélange sclon l'une quelconque des revendications précédentes, dans lequel :
(i) le constituant (A2) est un constituant contenant 2 à 12 atomes de carbone,
(ii) le ou les monomères aromatiques vinylidène du constituant (B) sont représentés par la formule générale suivante : 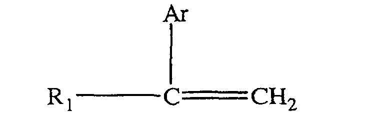 dans laquelle R₁ représente un atome d'hydrogène ou un groupe alkyle contenant 3 atomes de carbone ou moins, et Ar représente un groupe phényle ou un groupe phényle substitué par 1 à 5 substituants choisis parmi les atomes d'halogène, les groupes alkyle en C₁ à C₄ et les groupes halogénoalkyle en C₁ à C₄.

5. Mélange selon l'une quelconque des revendications précédentes, pour lequel le monomère copolymérisable du constituant (B) est choisi parmi l'α-méthylstyrène, le N-phényl maléimide, les N-alkyl maléimides, l'acrylamide, l'acrylonitrile, le méthacrylonitrile, l'anhydride maléique, l'acide acrylique, les acrylates d'alkyle en C₁ à C₄ et les méthacrylates d'alkyle en C₁ à C₄.

6. Mélange selon l'une quelconque des revendications précédentes, dont le constituant (B) est du polystyrène ou du polystyrène contenant un agent modifiant la résistance aux chocs.

7. Mélange selon l'une quelconque des revendications précédentes, pour lequel le constituant (A1a) est le styrène et le constituant (A2) est l'éthylène ou une combinaison d'éthylène et d'au moins une α-oléfine prise parmi le propylène, le 4-méthylpentène, le butène-1, l'hexène-1 et l'octène -1.

8. Mélange selon l'une quelconque des revendications précédentes, pour lequel le constituant (A1a) est le styrène, le constituant (A2) est l'éthylène ou une combinaison d'éthylène et d'au moins une α-oléfine prise parmi le propylène, le 4-méthylpentène, le butène-1, l'hexène-1 et l'octène-1, et le constituant (B) est le polystyrène ou du polystyrène contenant un agent modifiant la résistance aux chocs.

9. Article fabriqué qui comprend un mélange de matières polymères constitué de :
(A) 35 à 99 % en poids d'au moins un copolymère tel que défini dans la revendication 1 (A), et
(B) 1 à 65 % en poids d'au moins un polymère tel que défini dans la revendication 1 (B).

10. Utilisation d'un mélange selon l'une quelconque des revendications 1 à 8, pour la préparation d'une fibre, d'une mousse ou d'un latex.

11. Composition transformable en mousse, qui comprend :
(I) au moins un agent d'expansion, et
(II) au moins un copolymère ou mélange de copolymères, constitué de :
(A) 1 à 100 % en poids d'au moins un copolymère comprenant :
(1) 1 à 65 % en moles de (a) au moins un monomère aromatique vinylidène, ou (b) au moins un monomère aliphatique vinylidène encombré, ou (c) une combinaison d'au moins un monomère aromatique vinylidène et d'au moins un monomère aliphatique vinylidène encombré, et
(2) 35 à 99 % en moles d'au moins une α-oléfine aliphatique ayant 2 à 20 atomes de carbone, et
(B) 0 à 99 % en poids d'au moins un homopolymère d'un monomère aromatique vinylidène ou d'un monomère aliphatique vinylidène encombré, ou d'au moins un copolymère d'un ou plusieurs monomères aromatiques vinylidène et/ou d'un ou plusieurs monomères aliphatiques vinylidène encombrés et éventuellement d'un ou plusieurs monomères éthyléniquement insaturés polymérisables, autres que le ou les monomères aromatiques vinylidène ou le ou les monomères aliphatiques vinylidène encombrés.
